# EUROPÄISCHE PATENTSCHRIFT

(11) **EP 4 229 348 B1**
(45) Veröffentlichungstag und Bekanntmachung des Hinweises auf die Patenterteilung: **16.07.2025**
(21) Anmeldenummer: 21805358.5
(22) Anmeldetag: 15.10.2021
(51) Int. Cl.: F28F 3/12, F28D 20/02, F28D 20/00

(54) **SPEICHERMODUL, WÄRMESPEICHERPLATTE UND WÄRMESPEICHER-VORRICHTUNG**
STORAGE MODULE, HEAT STORAGE PLATE AND HEAT STORAGE DEVICE
MODULE DE STOCKAGE, PLAQUE A STOCKAGE DE CHALEUR ET DISPOSITIF DE STOCKAGE DE CHALEUR

(30) Priorität: 19.10.2020 DE 102020127524
(43) Veröffentlichungstag der Anmeldung: 23.08.2023
(73) Patentinhaber: Borrmann, Klaus-Dieter, 02627 Hochkirch (DE); Kagerer, Hans Jürgen, 01067 Dresden (DE)
(72) Erfinder: KAGERER, Hans-Jürgen, 01067 Dresden (DE); BORRMANN, Klaus Dieter, 02627 Hochkirch (DE)
(74) Vertreter: Lippert Stachow Patentanwälte Rechtsanwälte Partnerschaft mbB
(86) Internationale Anmeldenummer: PCT/DE2021/100834
(87) Internationale Veröffentlichungsnummer: WO 2022/083825

(56) Entgegenhaltungen:
- EP-A1- 2 354 687
- EP-A1- 3 611 457
- EP-A2- 2 864 729
- EP-B1- 2 864 729
- WO-A2-2020/209981
- CN-A- 105 823 362
- JP-A- 2007 147 165
- JP-A- S59 215 593
- US-A1- 2006 225 863
- US-A1- 2015 204 618

## Beschreibung

Die Erfindung betrifft ein Speichermodul und eine Wärmespeicher-Vorrichtung umfassend eine Vielzahl von Speichermodulen, welche jeweils ein modular ausgebildetes Gehäuse aufweisen, in dem jeweils mehrere mit Latentspeichermaterial gefüllte Wärmespeicherplatten in der Größenordnung von Makroverkapselungen angeordnet sind und das Gehäuse für den Wärmeaustausch mit einem Wärmetransportmedium eines externen Fluidleitungssystems durchströmbar ist. Ein Wärmespeicher mit einer Anzahl an mit Latentspeichermaterial gefüllten Wärmespeicherplatten gemäß dem Oberbegriff von Anspruch 1 ist aus dem Dokument EP 2 354 687 A1 bekannt.

Die Speichermodule der Wärmespeicher-Vorrichtung sind modular aufgebaute Wärmespeicher und weisen jeweils ein Gehäuse auf, das in modularer Bauweise eigenständig handhabbar, transportierbar und verbindbar mit mindestens einem analogen Gehäuse eines weiteren Speichermoduls ist.

Die Erfindung betrifft weiter eine mit einem Latentspeichermaterial gefüllte Wärmespeicherplatte zur Anordnung in einem Gehäuse eines Wärmespeichers, in dem mehrere Wärmespeicherplatten lagerbar sind und der von einem Wärmetransportmedium eines externen Fluidleitungssystems durchströmbar ist,

In jedem Gehäuse der o. g. Speichermodule oder in einem Gehäuse eines sonstigen stationären, solitären Wärmespeichers sind nach bekanntem Stand der Technik in einer bestimmten Anzahl mehrere großräumige, plattenförmig oder scheibenförmig ausgebildete Wärmespeicherelemente (Wärmespeicherplatten) angeordnet, in denen eine definierte Menge Latentspeichermaterial, so genanntes Phasenwechselmaterial (Phase Change Materials - PCM) luftdicht verkapselt ist (Makroverkapselung).

Das PCM ist wegen seiner hohen erzielbaren Energiespeicherdichte im Vergleich zur spezifischen Wärmekapazität von z.B. Wasser besonders zur Speicherung von thermischer Energie geeignet, wobei in der Regel die latente Schmelzwärme oder Absorptionswärme des PCM beim Phasenübergang des Schmelzens oder Erstarrens zur Wärmeaufnahme bzw. -abgabe aus bzw. in die Umgebung genutzt wird. Solche Latentspeichermaterialien sind beispielsweise Paraffine, Salzhydrate, Fettsäuren und Polyethylenglykole.

Die Wärmespeicher-Vorrichtung ist aus einer beliebigen Anzahl von Speichermodulen modular zusammenfügbar und hydraulisch mit dem externen Fluidleitungssystem verbindbar.

Im Betrieb des Speichermoduls, des solitären Wärmespeichers oder der Wärmespeicher-Vorrichtung werden das /die Speichermodul(e) bzw. der Wärmespeicher mit dem Wärmetransportmedium des externen Fluidleitungssystems durchströmt und hierbei die integrierten Wärmespeicherplatten umströmt, so dass die Wärmespeicherplatten im Wärmeaustausch mit dem im Speichermodul verweilenden Wärmetransportmedium steht und hierbei eine thermische Beladung (Wärmeenergieaufnahme) bzw. eine thermische Entladung (Wärmeenergieabgabe) durch das /die Speichermodul(e) erfolgt.

Das Wärmetransportmedium kann je nach Anwendungs-Spezifika des Fluidleitungssystems z.B. Wasser, Sole oder Kältemittel sein.

Ein Speichermodul und eine Wärmespeicher-Vorrichtung mit mehreren Speichermodulen der vorstehenden Art ist aus der Druckschrift DE 202019002821 U1 bekannt.

Das Gehäuse des transportablen Speichermoduls (PCM Hybrid Cube) ist ein Druckbehälter für fluide Wärmetransportmedien mit einem Behälterdruck bis zu 2,5 bar. Das Gehäuse besteht daher aus druckbeständigem, massivem Stahlblech.

In dem Druckbehälter sind z.B. 40 Wärmespeicherplatten (plattenförmige Makroverkapselungen mit gefülltem PCM) aus Kunststoff, z.B. aus fluoriertem Polyethylen, enthalten, die durch Befestigungsmittel an dem Gehäuse des Druckbehälters gehalten sind, nämlich mittels Führungsschienen des Druckbehälters, welche mit entsprechenden Ausnehmungen an den Wärmespeicherplatten korrespondieren, die in horizontaler Lage mit geringer Distanz parallel übereinander angeordnet und klemmend fixiert werden, wobei die Dicke der Wärmespeicherplatten, deren Oberflächenstruktur und die vorgegebene Distanzposition der Wärmespeicherplatten an den Führungsschienen des Druckbehälters die sehr flachen Strömungskanäle für die Durchströmung des Wärmetransportmediums bestimmen.

Die Makroverkapselung aus fluoriertem Polyethylen (PE) oder Polypropylen (PP) ermöglicht die Verwendung von PCMs in einem möglichen Temperaturbereich der Schmelzwärme von etwa 9,5° bis 85 °C. Die im Wesentlichen wärmeübertragende Oberfläche zweier sich gegenüber liegenden großen Plattenflächen der plattenförmigen Makroverkapselung (Wärmeübertragungsfläche) ist mit einem vorzugsweise fischgrätenartigen Oberflächenprofil ausgebildet, welche der besseren Wärmeübertragung zwischen der an sich schlecht wärmeleitenden PCM und dem Wärmetransportmedium dient.

Die modularen Speichermodule (PCM Hybrid Cubes) sind kaskadierbar, d. h. sie sind in der Höhe stapelbar und in der Länge aneinander reihbar und hydraulisch miteinander verbindbar, so dass theoretisch eine beliebige Größe einer transportablen Wärmespeicher-Vorrichtung mit einer hydraulischen Reihenschaltung und/oder hydraulischen Parallelschaltung des Wärmetransportmediums durch die Speichermodule möglich ist.

Zur Weiterleitung des Wärmetransportmediums zwischen Speichermodulen und insbesondere zur Erzeugung einer möglichst laminaren Strömung zur Verteilung des Wärmetransportmediums über den Strömungsquerschnitt des Gehäuses und zwischen den Wärmespeicherplatten des Speichermoduls sind auf der Anströmseite des Gehäuses (Frontseite des Gehäuses in Strömungsrichtung des Wärmetransportmediums) eines jeden Speichermoduls eine über den Strömungsquerschnitt des Gehäuses erstreckte Strömungsleiteinrichtung vorgesehen, bestehend aus einer Anschlussplatte mit einem Strömungsdurchgang und einer innenseitig gerippten Oberfläche und einer in Strömungsrichtung nachgeordnete querschnittsübergreifenden Lochplatte mit einer Lochstruktur aus Vielzahl von Löchern. An der Anschlussplatte kann wahlweise die Abströmseite des Gehäuses (Rückseite des Gehäuses in Strömungsrichtung des Wärmetransportmediums) eines vorgeschalteten Speichermoduls anliegen oder eine Rohrleitung des externen Fluidleitungssystems unmittelbar an dem Strömungsdurchgang der Anschlussplatte angeschlossen sein.

Nachteilig an der Ausführung nach dem Stand der Technik ist, dass einerseits die im Gehäuse starr fixierten Wärmespeicherplatten aus Kunststoff bei einer Speicherladetemperatur von größer 50 °C zur Verformung neigen, infolgedessen sie sich an ihrer Oberfläche (Wärmeübertragungsfläche) berühren können und die vorgesehenen Strömungskanäle für das Wärmetransportmedium verschließen und unterbrechen können, was zu einem erheblichen Verlust der Wärmeübertragungsleistung führt.

Des Weiteren hat sich in der Praxis gezeigt, dass die Strömungsleiteinrichtung keine zufriedenstellende gleichmäßige Verteilung des Wärmetransportmediums über den gesamten Strömungsquerschnitt des Gehäuses erreicht, so dass praktisch auch dadurch die Wärmeübertragungsleistung begrenzter ist als gewünscht.

Des Weiteren ist nachteilig, dass die Bauteile des Druckbehälter zur Fixierung der Wärmespeicherplatten und zur Verteilung des Wärmetransportmediums (Führungsschienen zur Auflage und Fixierung der Wärmespeicherplatten, großflächige Rippen der Anschlussplatte, großflächige Lochplatte) konstruktiv sehr aufwändig sind. Aufgrund der Anforderungen an die Druckstabilität des Druckbehälters müssen diese Bauteile sehr massiv und druckstabil ausgelegt und befestigt sein, was nicht nur zu hohen Herstellungskosten, sondern auch zu einer hohen Masse des Speichermoduls führt.

Die Gesamtkonstruktion des Speichermoduls und folglich die der modularen Wärmespeicher-Vorrichtung hat demzufolge ein sehr hohes Gewicht, so dass auch im Hinblick auf die Gewichtsbeschränkungen nach der StVO die Transportstabilität der Wärmespeicher-Vorrichtung an sich und im Straßenverkehr erheblich eingeschränkt ist.

Der Erfindung liegt die Aufgabe zugrunde, eine Speichermodul, eine Wärmespeicherplatte und eine Wärmespeicher-Vorrichtung bereitzustellen, mit der eine höhere Effizienz der Wärmeübertragung des Speichermoduls gewährleistet wird, insbesondere mit der das Verhältnis der erreichbaren Wärmespeicherkapazität des Speichermoduls zu dessen Gewicht verbessert wird.

Weiter soll die Effizienz der Wärmeübertragung in der Gesamtbilanz der Wärmespeicher-Vorrichtung erhöht werden, wobei insbesondere auch das Verhältnis der erreichbaren Wärmespeicherkapazität der Wärmespeicher-Vorrichtung zu dessen Gewicht verbessert werden soll.

Letztlich soll eine Wärmespeicher-Vorrichtung mit einer sehr hohen Wärmespeicherkapazität von etwa 3 MWh straßentauglich transportiert werden können.

Die Aufgabe wird erfindungsgemäß einerseits dadurch gelöst, dass das Gehäuse des Speichermoduls und die Wärmespeicherplatten derart ausgebildet sind, dass diese freibeweglich und mit einem definierten Mindestabstand ihrer Wärmeübertragungsflächen zueinander lose im Gehäuse des Speichermoduls anordenbar sind, so dass zwischen zwei benachbarten Wärmespeicherplatten ein definierter Strömungskanal für den Transport des Wärmetransportmediums und für den Wärmeaustausch zwischen den Wärmespeicherplatten und dem Wärmetransportmedium gebildet ist.

Hierfür ist neben den Wärmespeicherplatten auch das Gehäuse des Speichermoduls so ausgebildet, dass die Wärmeübertragungsflächen lose gegenüber dem Gehäuse in diesem gelagert werden können, das heißt dass gegenüber den Ausführungen nach dem Stand der Technik mit gehäusefest angeordneten Wärmeübertragungsflächen keine Gehäusehalterungen für die Fixierung der Wärmeübertragungsflächen vorgesehen und erforderlich sind.

Das Gehäuse und die Wärmespeicherplatten sind derart ausgebildet, dass bei einer halterlosen - nicht am Gehäuse fixierten - Lagerung von unmittelbar übereinander und/oder unmittelbar nebeneinander im Gehäuse angeordneter Wärmespeicherplatten, ein definierter Strömungskanal gebildet ist.

Mit anderen Worten ist bei dieser Ausführung der Wärmespeicherplatten bestimmt, dass diese eigenstabil und selbstragend (ohne Halterungs- oder Führungsmittel des Gehäuses zu benötigen) und mit einer solchen äußeren Kontur ausgebildet sind, dass die Wärmespeicherplatten lose in dem Gehäuse des Speichermoduls angeordnet werden können und sich dabei die Wärmeübertragungsflächen der unmittelbar benachbart angeordneten Wärmespeicherplatten nicht berühren.

So können **z.B.** die Wärmespeicherplatten im Gehäuse in horizontaler Lage übereinander gestapelt angeordnet sein oder in vertikaler Lage nebeneinander gereiht angeordnet sein, wobei die Wärmeübertragungsflächen der unmittelbar übereinander liegenden Wärmespeicherplatten bzw. der unmittelbar nebeneinander liegenden Wärmespeicherplatten stets mit einem Mindestabstand zueinander beabstandet bleiben.

Ebenso können die Wärmespeicherplatten im Gehäuse in vertikaler Lage übereinandergestapelt angeordnet sein oder in horizontaler Lage nebeneinander gereiht angeordnet sein, wobei auch hier die Wärmeübertragungsflächen der unmittelbar übereinander liegenden Wärmespeicherplatten bzw. der unmittelbar nebeneinander liegenden Wärmespeicherplatten stets zueinander beabstandet bleiben.

Bestimmte erfindungsgemäße Ausbildungen der Wärmespeicherplatten ermöglichen diesen definierten Mindestabstand ihrer zueinander zugewandten Wärmeübertragungsflächen.

Die Wärmespeicherplatten können insbesondere jeweils mindestens ein Distanzelement aufweisen, das in einem gewissen Maß über der Höhe des Oberflächenprofils der Wärmeübertragungsfläche der Wärmespeicherplatte übersteht (Überstandsmaß), so dass sich die Wärmespeicherplatten in einer übereinander gestapelten oder in einer nebeneinander gereihten Anordnung lediglich im Bereich des Distanzelements oder im Bereich der zueinander weisenden Distanzelemente kontaktieren und so ein definierter Mindestabstand der Wärmeübertragungsflächen zweier unmittelbar übereinander oder nebeneinander benachbarter Wärmespeicherplatten garantiert wird.

Ist z.B. ein Distanzelement zur Beabstandung zweier unmittelbar übereinander oder nebeneinander benachbarter Wärmespeicherplatten vorgesehen, ergibt sich der definierte Mindestabstand der Wärmeübertragungsflächen der benachbarter Wärmespeicherplatten aus dem Überstandsmaß des einen Distanzelements über der Wärmeübertragungsfläche der Wärmespeicherplatte. Sind dagegen z.B. zwei sich gegenüberliegende, zueinander weisende Distanzelemente zur Beabstandung zweier unmittelbar übereinander oder nebeneinander benachbarter Wärmespeicherplatten vorgesehen, ergibt sich der definierte Mindestabstand der Wärmeübertragungsflächen aus der Summe der Überstandsmaße der beiden Distanzelemente.

Das /die Distanzelement(e) kann aus Kunststoffmaterial der Wärmespeicherplatten (z.B. aus PE oder PP) bestehen und einerseits zugleich bei der formgebenden Herstellung der Wärmespeicherplatten mit ausgebildet werden oder andererseits an vorgefertigten Wärmespeicherplatten angefügt werden.

Das Distanzelement kann zum Beispiel als einen umlaufenden Stegrahmen entlang der äußeren Kante der Plattenfläche der Wärmespeicherplatte ausgebildet sein.

Ein oder mehrere Distanzelemente kann / können als ein oder mehrere längserstreckte Stege ausgebildet sein, die parallel oder diagonal zur äußeren Kante der Plattenfläche angeordnet sind, oder als ein oder mehrere auf der Plattenfläche verteilt angeordnete punktuelle Puffer ausgebildet sein.

Das Distanzelement einer Wärmespeicherplatte kann einzeln für sich oder in Zusammenwirken mit dem Distanzelement der benachbarten Wärmespeicherplatte den Mindestabstand zwischen zwei benachbarten Wärmespeicherplatten festlegen.

Alternativ wird andererseits die Aufgabe auch dadurch gelöst, dass gesonderte fluiddurchlässige Distanzstrukturen zwischen den Wärmespeicherplatten angeordnet sind, so dass die Wärmespeicherplatten mit einem definierten Mindestabstand der Wärmeübertragungsfläche zueinander im Gehäuse des Speichermoduls anordenbar / lagerbar sind und zwischen zwei unmittelbar benachbarten Wärmespeicherplatten ein definierter Strömungskanal für den Transport des Wärmetransportmediums gebildet ist.

Als fluiddurchlässige Distanzstrukturen sind beispielsweise Schaumstrukturmatten aus Kunststoff oder Metall denkbar, die als lose Zwischenlage zwischen jeweils zwei übereinander zu stapelnden Wärmeübertragungsflächen dienen und eine stabile Schichtdicke aufweisen, die auch bei der Stapelung von mehreren Wärmespeicherplatten übereinander nicht zusammenfällt.

Die Wärmespeicherplatten sind mit Hilfe des /der speziellen Distanzelement(e) und /oder der speziellen Distanzstrukturen selbstständig (d. h. lose gegenüber dem Gehäuse des Speichermoduls) und dennoch abstandsgetreu stapelbar.

Insbesondere kann durch die erfindungsgemäße Ausführung der Wärmespeicherplatten mit speziellem Distanzelement(en) und /oder durch die erfindungsgemäße Ausführung von speziellen Distanzstrukturen auf die aufwändige und massenintensive Konstruktion von metallischen Führungsschienen (Frästeile) oder sonstigen metallischen Halterungen für die Wärmespeicherplatten am Gehäuse des Speichermoduls verzichtet werden und damit erheblich Gewicht eingespart werden.

Das Gehäuse des Speichermoduls und die Wärmespeicherplatte sind weiterhin in ihrem Größenverhältnis derart ausgebildet, dass bei der Einlagerung der Wärmespeicherplatten im Gehäuse jeweils eine Pufferzone mit geringfügigem Spielmaß zwischen den nebeneinander lagernden Wärmespeicherplatten und zwischen den wandnah lagernden Wärmespeicherplatten und den Gehäusewänden in horizontaler und vertikaler Richtung realisiert ist, so dass die Wärmespeicherplatten während der Betriebsbedingungen des Speichermoduls bei einer Speicherladetemperatur von bis zu 85 °C eine ungehinderte thermische Ausdehnung erfahren können, die lediglich zu einer leichten Fixierung der Wärmespeicherplatten innerhalb des Gehäuses führt. Die Pufferzone verhindert ein kraftschlüssiges Verklemmen der Wärmespeicherplatten untereinander und gegenüber der Gehäusewand mit folglich erheblichen Verformungserscheinungen.

Sind die Wärmespeicherplatten z.B. mit Paraffinen gefüllt, und ist das verwendete Wärmetransportmedium Wasser, können diese aufgrund der geringeren Dichte des Paraffins im Rahmen der durch die Gehäusewand des Speichermoduls und durch die speziellen Distanzelemente bzw. Distanzstrukturen gegebenen Freiheitsgrade unter bestimmten thermischen Verhältnissen sogar schwimmend im Gehäuse des Speichermoduls lagerbar sein.

Die erfindungsgemäße Ausführung eignet sich sowohl für drucklos als auch für druckbelastet ausgebildete Speichermodule.

Durch die freibewegliche Lagerung der Wärmespeicherplatten im Gehäuse des Speichermoduls und mit entsprechender Anordnung und Ausbildung des /der speziellen Distanzelement(e) an den Wärmespeicherplatten und /oder mit entsprechender Ausbildung und Anordnung von speziellen Distanzstrukturen kann auch im Falle der thermisch bedingten Verformung der im Gehäuse des Speichermoduls gelagerten Wärmespeicherplatten ein Zusammenfallen der benachbarten Wärmespeicherplatten und damit ein unerwünschtes Kontaktieren der Wärmeübertragungsflächen zweier benachbarter Wärmespeicherplatten infolge des thermischen Verformens der Wärmespeicherplatten vermieden werden.

Somit kann in jedem Temperaturzustand des Speichermoduls und an jeder Stelle des durch den definierten Mindestabstand der Wärmeübertragungsflächen erzeugten Strömungskanals zwischen den benachbarten Wärmespeicherplatten stets ein im Wesentlichen gleichmäßig ausgebildeter Strömungsquerschnitt aller Strömungskanäle bzw. ein im Wesentlichen gleichbleibender Strömungswiderstand für den Transport des Wärmetransportmediums gewährleistet werden, was im Ergebnis für eine gewünschte dauerhaft hohe Wärmeübertragungsleistung sorgt.

Vorzugsweise sind die Wärmespeicherplatten derart ausgebildet, dass die zwischen den benachbarten Wärmespeicherplatten ausgebildeten Strömungskanäle und gegebenenfalls die zwischen den Wärmespeicherplatten und dem Gehäuse ausgebildeten Strömungskanäle einen im Wesentlichen gleichgroßen Strömungsquerschnitt aufweisen und folglich einen im Wesentlichen gleichgroßen Strömungswiderstand des Wärmetransportmediums erzeugen.

Beispielsweise können zu diesem Zweck die unmittelbar benachbarten Wärmespeicherplatten jeweils zueinander weisende Distanzelemente aufweisen, die über ein einheitliches Überstandsmaß über der Höhe des Oberflächenprofils der Wärmeübertragungsfläche der Wärmespeicherplatte verfügen und im weiteren die dem Gehäuse zugewandten, wandnah gelegenen Wärmespeicherplatten wandseitig mit Distanzelementen ausgeführt sein, welche ein doppelt so großes Überstandsmaß über der Höhe des Oberflächenprofils der Wärmeübertragungsfläche der Wärmespeicherplatte aufweisen, als die zueinander weisenden Distanzelemente der unmittelbar benachbarten Wärmespeicherplatten, um den gleichen Mindestabstand der Wärmeübertragungsflächen aller Wärmespeicherplatten und damit die gleichen Kanalhöhen aller sich bildenden Strömungskanäle zu erreichen.

In der Weise entstehen einander hydraulisch abgeglichene Strömungskanäle über dem gesamten Querschnitt des Speichermodul-Gehäuses, die insgesamt den Strömungswiderstand durch das Gehäuse gleichmäßig verteilen und erhöhen, so dass sich die Strömung des Wärmetransportmediums gleichmäßig ausbreitet und zugleich verlangsamt wird und damit die Verweildauer des Wärmetransportmediums innerhalb des Gehäuses zwischen den benachbarten Wärmespeicherplatten erhöht wird, wodurch die Wärmeübertragungsleistung weiter verbessert werden kann.

Vorzugsweise sind die Mindestabstände der Wärmeübertragungsflächen benachbarter Wärmespeicherplatten zueinander so minimal ausgebildet, dass Strömungskanäle zwischen den benachbarten Wärmespeicherplatten und zwischen den Wärmespeicherplatten und dem Gehäuse mit einem besonders hohen Strömungswiderstand entstehen, welche die Strömung des Wärmetransportmediums weiter verlangsamt und so die Verweildauer des Wärmetransportmediums zwischen den Wärmespeicherplatten innerhalb des Gehäuses unter weiterer Verbesserung der Wärmeübertragungsleistung weiter erhöht.

Im Weiteren können die Wärmespeicherplatten so ausgebildet und übereinander gestapelt angeordnet sein, dass die sich gegenüberliegenden Wärmeübertragungsflächen der benachbarten Wärmespeicherplatten ein gegenläufiges Oberflächenprofil aufweisen.

Ist beispielsweise ein fischgrätenartiges Oberflächenprofil der Wärmeübertragungsflächen mit schräg verlaufenden Grätenprofil vorgesehen, so wird der Verlauf des Grätenprofils an den sich gegenüberliegenden Wärmeübertragungsflächen zueinander konträr ausgebildet und angeordnet, so dass sich ein gedachtes Gittermuster der sich gegenüberstehenden Grätenprofile ergibt.

In der Weise entstehen Strömungskanäle zwischen den benachbarten Wärmespeicherplatten, in deren eine besonders turbulente Strömung des Wärmetransportmediums erzeugt wird, welche den Strömungswiderstand ebenfalls erhöhen und einander abgleichen, so dass auch hierdurch die Strömung des Wärmetransportmediums gleichmäßig verlangsamt und damit die Verweildauer des Wärmetransportmediums zwischen den benachbarten Wärmespeicherplatten erhöht wird, wodurch die Wärmeübertragungsleistung weiter verbessert werden kann.

Die Aufgabe wird erfindungsgemäß auch dadurch gelöst, dass an der Anströmseite des Gehäuses des Speichermoduls einen Einlassdeckel mit einem Strömungseingang und einer (ersten) Strömungsleiteinrichtung angeordnet ist, welche einen flachen Fluid-Verteilkasten und eine vom Strömungseingang in Strömungsrichtung des Wärmetransportmediums beabstandet angeordnete Prallplatte aufweist.

Der Strömungseingang (Öffnung für den Eintritt des Wärmetransportmediums in das Speichermodul) kann einen passenden Anschlussstutzen zur Verbindung mit einem externem Rohrstück oder Rohrleitung aufweisen.

Der Einlassdeckel kann mittels eines umlaufenden Flansches an der Anströmseite des Gehäuses des Speichermoduls fluid- und druckdicht befestigt werden. Der Einlassdeckel und die Teile der Strömungsleiteinrichtung können z.B. aus Stahlblech verschiedener Dicke gefertigt sein.

Damit eignet sich der Einlassdeckel sowohl für drucklos als auch für druckbeaufschlagt ausgebildete Speichermodule.

Der Fluid-Verteilkasten weist eine ebene Anschlussplatte auf, in der vorzugsweise mittig der Strömungseingang ausgebildet ist, und an der gehäuseinnenseitig mittels Abstandhalter die Prallplatte befestigt ist. Weiter weist der Fluid-Verteilkasten einen kurzen Rahmen auf, der randseitig an der Anschlussplatte anschließt und sich in Hauptströmungsrichtung des durch den Strömungseingang eintretenden Wärmetransportmediums erstreckt. D.h. der Fluid-Verteilkasten ist innenseitig in Hauptströmungsrichtung des Wärmetransportmediums und damit in Richtung der im Gehäuse gelagerten Wärmespeicherplatten offen ausgebildet.

Die Prallplatte erzeugt vornehmlich eine vertikal gerichtete Umlenkung des über den Anschlussstutzen der Strömungsleiteinrichtung einströmenden und auf die Prallplatte auftreffenden Volumenstroms des Wärmetransportmediums.

Der so eingetragene Volumenstrom des Wärmetransportmediums verteilt sich dadurch zunächst quer zur Hauptströmungsrichtung des Wärmetransportmediums innerhalb des Fluid-Verteilkasten, bevor der so verteilte Volumenstrom in die bereitgehaltenen Strömungskanäle zwischen den einzelnen Wärmespeicherplatten einströmt.

Diese erfindungsgemäße Strömungsleiteinrichtung macht die bisher im Stand der Technik zur Verteilung des Wärmetransportmediums notwendige massive Anschlussplatte mit ihren aufwändig hergestellten, gefrästen Rippen bzw. Nuten und die großflächige Lochplatte entbehrlich.

Diese Ausführung bewirkt somit mit einfachen konstruktiven Mitteln nachweislich eine gleichmäßigere Verteilung des Wärmetransportmediums über den gesamten Strömungsquerschnitt des Gehäuses des Speichermoduls und zwar bereits von Anbeginn der Strömungsstrecke des Wärmetransportmediums durch das Speichermodul.

Damit wird eine deutliche Erhöhung der Wärmeübertragungsleistung des Speichermoduls bei zugleich geringerer Masse erreicht.

Vorzugsweise ist die Prallplatte als ein Lochblech mit definierter Lochgröße und Lochverteilung ausgeführt, welche zusätzlich eine feine horizontal gerichtete Verteilung des über den Anschlussstutzen der Strömungsleiteinrichtung einströmenden Volumenstroms bewirkt. Die Lochung der Prallplatte führt zu einer homogenen, druckgleichen und damit weiter besserten Verteilung des Volumenstroms des Wärmetransportmediums über den gesamten Strömungsquerschnitt des Gehäuses des Speichermoduls und in Anströmung der Strömungskanäle zwischen den einzelnen Wärmespeicherplatten, was die Wärmeübertragungsleistung weiter erhöht.

Die Aufgabe wird erfindungsgemäß auch dadurch gelöst, dass an der Abströmseite des Gehäuses ein Auslassdeckel mit einem Strömungsausgang und einer zweiten Strömungsleiteinrichtung angeordnet ist, welche einen flachen Fluid-Sammelkasten und ein in dem Fluid-Sammelkasten integrierten Stromführungs-Element aufweist.

Der Strömungsausgang (Öffnung für den Austritt des Wärmetransportmediums aus dem Speichermodul) kann einen passenden Anschlussstutzen zur Verbindung mit einem externem Rohrstück oder einer Rohrleitung aufweisen.

Der Auslassdeckel kann mittels eines umlaufenden Flansches an der Abströmseite des Gehäuses des Speichermoduls fluid- und druckdicht befestigt werden. Der Auslassdeckel und die Teile der Strömungsleiteinrichtung können z.B. aus Stahlblech verschiedener Dicke gefertigt sein.

Damit eignet sich der Auslassdeckel sowohl für drucklos als auch für druckbeaufschlagt ausgebildete Speichermodule.

Der Fluid-Sammelkasten weist eine ebene Anschlussplatte auf, in der vorzugsweise mittig der Strömungsausgang ausgebildet ist und gehäuseinnenseitig das Stromführungs-Element, welches den Strömungsausgang beabstandet überdeckend ausgebildet und angeordnet ist. Das Stromführungs-Element kann z.B. in der Art eines hohlprofilierten, tunnelartigen Kanalabschnitts (Stromführungs-Kanal) ausgebildet sein, welcher einen Endes oder an beiden Enden einen offenen Strömungsquerschnitt aufweist und den Strömungsausgang hohl bzw. beabstandet überdeckt.

Der Stromführungs-Kanal kann sich z.B. vom Strömungsausgang nach oben in Deckelnähe und/oder nach unten in Bodennähe des Gehäuses erstrecken.

Es hat sich gezeigt, dass insbesondere bei einer Ausführung des Stromführungs-Kanals mit Erstreckung in Bodennähe und unten offenem Strömungsquerschnitt mit folglicher Zwangsführung des Wärmetransportmediums vom unteren Bereich des Speichermoduls durch den Stromführungs-Kanal einer Bildung von Kaltzonen am Ende der Strömungsstrecke des Wärmetransportmediums durch das Speichermodul weitestgehend entgegengewirkt werden kann und im Weiteren ein besserer Wärmeaustausch und damit eine kürzere Be- bzw. Endladezeit des Speichermoduls erfolgen kann.

Der sich an die ebene Anschlussplatte randseitig anschließende kurze Rahmen des Fluid-Sammelkastens erstreckt sich entgegen der Hauptströmungsrichtung des Wärmetransportmediums durch das Gehäuse. D.h. der Fluid-Sammelkasten ist gehäuseinnenseitig in Richtung der im Gehäuse gelagerten Wärmespeicherplatten offen ausgebildet.

Der Strom des durch das Gehäuse transportierten Wärmetransportmediums wird in dem Fluid-Sammelkasten und nachfolgend mittels des Stromführungs-Elements zusammengeführt.

Die Erfindung geht dabei davon aus, dass sich im Speichermodul, insbesondere am Ende der Strömungsstrecke des Wärmetransportmediums durch das Speichermodul, unterschiedlich temperierte Fluidmengen des Wärmetransportmediums bilden können und die niedrig temperierten Fluidmengen das Bestreben haben, sich im unteren Bereich des Speichermoduls zu konzentrieren.

Mit der erfindungsgemäßen Strömungsleiteinrichtung wird eine Zwangsströmung des Wärmetransportmediums realisiert, welche neben einem besseren Wärmeaustausch innerhalb des Speichermoduls im Weiteren die Fluidmengen des Wärmetransportmediums insbesondere vor dem Austritt aus dem Strömungsausgang und dem Übergang in das nachgeschaltete Speichermodul thermisch neu durchmischt.

Diese Ausführung bewirkt somit mit konstruktiv einfachen Mitteln nachweislich eine gleichmäßigere Temperaturverteilung des Wärmetransportmediums über den Strömungsquerschnitt bis zum Ende der Strömungsstrecke des Wärmetransportmediums durch das Speichermodul und eine gleichmäßigere Temperaturverteilung des Wärmetransportmediums über den Strömungsquerschnitt zu Beginn der Strömungsstrecke des Wärmetransportmediums durch das nachgeschaltete Speichermodul.

Damit wird die Wärmeübertragungsleistung eines jeden Speichermoduls weiter erhöht.

Das erfindungsgemäße Speichermodul kann autark oder in beliebig großen Paketen von mehreren Speichermodulen als Wärmespeicher-Vorrichtung in einem drucklosen oder Druck beaufschlagtem Fluidleitungssystem betrieben werden.

Die Speichermodule der Wärmespeicher-Vorrichtung können beliebig miteinander hydraulisch verschalten werden, um den Prozess des thermischen Beladens (Wärmeenergieaufnahme), des Wärmespeicherns und des thermischen Entladens (Wärmeenergieabgabe) der Speichermodule zu gestalten.

In einer möglichen Ausführung der Wärmespeicher-Vorrichtung können mehrere Speichermodule zumindest in einer hydraulischen Reihenschaltung verbunden sein.

Dadurch findet bei beispielsweise einem thermischen Beladeprozess zunächst eine Temperaturerhöhung im ersten Speichermodul, danach in dem in Reihe nachgeschalteten zweiten Speichermodul und weiter im nachgeschalteten dritten Speichermodul usw. statt. Der Temperaturgradient des thermischen Energieeintrags durch das Wärmetransportmedium in das Speichermodul über die in Reihe geschalteten Speichermodule kann zu Beginn groß sein und sich im Verlaufe der Beladungsdauer immer weiter abschwächen, bis eine Sättigung des erreichbaren thermischen Energieniveaus erst im ersten, dann im zweiten und weiter dritten Speichermodul usw. eintritt.

In einer weiteren möglichen Ausführung der Wärmespeicher-Vorrichtung können mehrere Speichermodule zumindest in einer hydraulischen Parallelschaltung verbunden sein.

Dadurch findet bei beispielsweise einem thermischen Beladeprozess eine im Wesentlichen simultane Temperaturerhöhung im ersten, im parallel geschalteten zweiten, im parallel geschalteten dritten Speichermodul usw. statt. Der Temperaturgradient des thermischen Energieeintrags durch das Wärmetransportmedium über jedes einzelne, parallel geschaltete Speichermodul kann zu Beginn groß sein und sich im Verlaufe der Beladungsdauer immer weiter abschwächen, bis eine Sättigung des erreichbaren thermischen Energieniveaus simultan in jedem einzelnen Speichermodul eintritt.

Selbstverständlich sind von der Erfindung Ausführungen der Wärmespeicher-Vorrichtung umfasst, bei der eine hydraulische Reihenschaltung der Speichermodule und eine hydraulische Parallelschaltung der Speichermodule miteinander kombinierbar sind.

Die Aufgabe wird betreffs der Wärmespeicher-Vorrichtung auch dadurch gelöst, dass die Strömungseingänge mehrere Speichermodule der Wärmespeicher-Vorrichtung mittels einzelner Verbindungsleitungen mit einem Verteilkanal und die Strömungsausgänge der Speichermodule mittels einzelner Verbindungsleitungen mit einem Sammelkanal hydraulisch verbindbar sind, wobei der Verteilkanal einen Anschluss für eine Zulaufleitung von einem externen Fluidleitungssystem und der Sammelkanal einen Anschluss für eine Rücklaufleitung zu einem externen Fluidleitungssystem aufweist, wobei der Verteilkanal und der Sammelkanal derart ausgebildet und in Position in Bezug zu den Strömungseingängen bzw. zu den Strömungsausgängen angeordnet sind, dass die Gesamtlänge der Verbindungsleitungen eines ersten Speichermoduls gleich der Gesamtlänge der Verbindungsleitungen eines in Strömungsrichtung nebengeordneten zweiten und weiteren nebengeordneten Speichermoduls ist.

Mit anderen Worten sind die Verbindungsleitungen, der Verteilkanal und der Sammelkanal derart ausgebildet und angeordnet, dass die Summe der Längen (Gesamtlänge) der Verbindungsleitung vom Verteilkanal zum Strömungseingang eines Speichermoduls und der Verbindungsleitung vom Strömungsausgang des Speichermoduls zum Sammelkanal im Wesentlichen gleich groß der Summe der Längen (Gesamtlänge) der Verbindungsleitung vom demselben Verteilkanal zum Strömungseingang eines hydraulisch parallel geschalteten Speichermoduls und der Verbindungsleitung vom Strömungsausgang dieses parallel geschalteten Speichermoduls zu demselben Sammelkanal ist.

Dies gilt im Weiteren auch, wenn mehrere Speichermodule, wie in einem Speichermodul-Paket, hydraulisch parallel geschalteten sind.

Dabei geht die Erfindung davon aus, dass auch der Strömungsquerschnitt alle beteiligten Verbindungsleitungen gleichgroß gewählt ist.

Sind zudem mehrere Speichermodul-Pakete in einer hydraulischen Reihenschaltung vorgesehen, betrifft die Gesamtlänge der Verbindungsleitungen jeweils die Länge der Verbindungsleitung vom Verteilkanal zum Strömungseingang des ersten Speichermoduls in der Reihe und die Länge der Verbindungsleitung vom Strömungsausgang des letzte Speichermodul in der Reihe zum Sammelkanal.

Damit erfolgt die hydraulische Anbindung eines jeden Speichermoduls an das externe Fluidleitungssystem stets mit im Wesentlichen gleichgroßem Strömungswiderstand und folglich mit einer im Wesentlichen gleichermäßigen Strömungsverteilung des Wärmetransportmediums auf alle angeschlossenen Speichermodule.

Der Verteilkanal und der Sammelkanal weisen jeweils einen allseitig abgeschlossenen Kanalabschnitt auf, der einen wesentlich größeren Kanalquerschnitt hat, als die Summe der Strömungsquerschnitte der einzelnen angeschlossenen Verbindungsleitungen.

Neben dem Anschlussstutzen für die Zulaufleitung aus dem externen Fluidleitungssystem weist der Verteilkanal so viele Anschlussstutzen an dem Kanalabschnitt auf, wie Strömungseingänge der Speichermodule anzubinden sind.

Ebenso weist der Sammelkanal neben dem Anschlussstutzen für die Rücklaufleitung in das externe Fluidleitungssystem so viele Anschlussstutzen an dem Kanalabschnitt auf, wie Strömungsausgänge der Speichermodule zu verbinden sind.

Der Kanalabschnitt hat einen entsprechend der Anzahl der anzubindenden Speichermodule und der Gesamtmenge des Wärmetransportmediums durch alle Speichermodule einen definierten Kanalquerschnitt.

Je nach Anzahl und Anordnung der Speichermodule in der Wärmespeicher-Vorrichtung und der Position des Verteilkanal und des Sammelkanal in Bezug zu den einzelnen Strömungseingängen bzw. Strömungsausgängen der Speichermodule sind die Anschlussstutzen verschiedentlich am Kanalabschnitt angeordnet.

Bei einer horizontalen Ausrichtung des Kanalabschnitts des Verteil- bzw. Sammelkanals können die Anschlussstutzen für eine annähernd längengleiche Anbindung der Strömungseingänge bzw. Strömungsausgänge im genauen oder annähernd gleichen Abstand der Strömungseingänge bzw. Strömungsausgänge der horizontal benachbarten Speichermodule nebeneinander anordnet sein. Entsprechend der gewählten Höhenposition des Kanalabschnitts können für den Anschluss der Strömungseingänge bzw. Strömungsausgänge der vertikal benachbarten Speichermodule eine verschiedene Anzahl der Anschlussstutzen an den sich gegenüberliegenden Seiten des Kanalabschnitt angeordnet sein.

Alternativ können bei einer vertikalen Ausrichtung des Kanalabschnitts die Anschlussstutzen für eine annähernd längengleiche Anbindung der Strömungseingänge bzw. Strömungsausgänge im genauen oder annähernd gleichen Abstand der Strömungseingänge bzw. Strömungsausgänge vertikal benachbarter Speichermodule nebeneinander angeordnet sein. Für den Anschluss der Strömungseingänge bzw. Strömungsausgänge der horizontal benachbarten Speichermodule können entsprechend der gewählten Seitwärtsposition des Kanalabschnitts eine verschiedene Anzahl der Anschlussstutzen an den sich gegenüberliegenden Seiten des Kanalabschnitt angeordnet sein.

Zudem sind der Verteilkanal auf der Anströmseite der Speichermodule und der Sammelkanal auf der Abströmseite der Speichermodule so lageversetzt zueinander angeordnet, dass alle Speichermodule mit im Wesentlichen der gleichen Rohrleitungslänge ihrer Verbindungsleitungen mit dem Verteilkanal und dem Sammelkanal verbunden werden können.

Ist zum Beispiel eine Wärmespeicher-Vorrichtung mit 9 Speichermodulen in einer kompakt quadratischen Anordnung von 3x3 Speichermodulen (3 Reihen von je 3 Speichermodulen übereinander) vorgesehen, kann der Verteilkanal und der Sammelkanal jeweils 9 Anschlussstutzen aufweisen.

Zur Realisierung der im Wesentlichen gleichen Rohrleitungslänge der Verbindungsleitungen aller Speichermodule mit dem Verteilkanal und dem Sammelkanal, werden der Verteilkanal an der Anströmseite der Speichermodule z.B. horizontal zwischen der unteren und mittleren Reihe der Speichermodule angeordnet und der Sammelkanal an der Abströmseite der Speichermodule dazu lageversetzt und horizontal zwischen der mittleren und der oberen Reihe angeordnet.

Verteilkanal und Sammelkanal sind in dem Beispiel also horizontal und zueinander höhenversetzt angeordnet.

Der Verteilkanal weist zur annähernd längengleichen Anbindung der Speichermodule der unteren Reihe drei Anschlussstutzen nebeneinander auf der Unterseite des Kanalabschnitts und für die Anbindung der Speichermodule der mittleren und oberen Reihe 6 Anschlussstutzen nebeneinander auf der Oberseite des Kanalabschnitts.

Umgekehrt trifft dies für den Sammelkanal zu. Dieser weist zur Anbindung der Speichermodule der oberen Reihe drei Anschlussstutzen nebeneinander auf der Oberseite des Kanalabschnitts und für die Anbindung der Speichermodule der mittleren und unteren Reihe 6 Anschlussstutzen nebeneinander auf der Unterseite des Kanalabschnitts auf.

Damit erhalten die Verbindungsleitungen aller Speichermodule mit einerseits dem Verteilkanal und andererseits dem Sammelkanal die im Wesentlichen gleichen Leitungslängen, so dass mit dem hydraulischen Anschluss des Verteilkanals und des Sammelkanals an das externen Fluidleitungssystem alle eingebundenen Speichermodule analog dem Tichelmannschen Prinzip einen im Wesentlichen gleichgroßen Strömungswiderstand erfahren.

In dieser Anordnung werden alle verbundenen Speichermodule in gleicher Zeiteinheit mit der gleichen Menge an Wärmetransportmedium durchströmt, so dass die mögliche Wärmeübertragungsleistung aller Speichermodule gleichermaßen hoch ausgeschöpft werden kann. Dies sorgt für eine hohe Effizienz der Wärmeübertragung in der Gesamtbilanz der Wärmespeicher-Vorrichtung.

Es ist zudem mit gleichem Effekt möglich, den Verteilkanal und den Sammelkanal baugleich auszubilden und gemäß dem vorstehenden Beispiel bei gleichem Höhenversatz lediglich richtungsverkehrt /spiegelverkehrt anzuordnen und anzuschließen.

Die erfindungsgemäße hydraulische Anbindung mehrerer Speichermodule an das externe Fluidleitungssystem ist sowohl für beliebige Packungsgrößen von übereinander bzw. nebeneinander angeordneten Speichermodulen als auch für beliebige Packungsgrößen mit mehreren in Reihe nacheinander angeordneten Speichermodulen geeignet.

In Reihe angeordnete Speichermodule werden mittels Verbindungsstücke zwischen jeweils einem Strömungsausgang des in der Reihe ersten Speichermoduls mit dem jeweiligen Strömungseingang des nachfolgenden Speichermoduls verbunden usw.

Die Verbindungsstücke können flexible Leitungsabschnitte aus Kunststoff (z.B. gummierte Flex-Schläuche) oder aus Metall (z. B. Edelstahl-Wellrohre) sein, welche mögliche Relativbewegungen der aneinander gereihten Speichermodule, insbesondere unter Transportbedingungen, kompensieren können.

In einer Ausführung als mobile Wärmespeicher-Vorrichtung können die in Paketen angeordneten Speichermodule auf einer transportablen Ladefläche, wie zum Beispiel auf einer handelsüblichen Transport-Plattform (Flat-Rack, Container-Plattform), angeordnet sein und mittels Fixierungsmittel, wie z.B. mittels sogenannten Lashing - Verbindungen (Verzurren, Vertauen mit Zugbändern, Strapse, Taue z.B. aus Polyestergewebe) und im weiteren mittels sogenannter Dynablock-Verschlüssen (zum Umlenken und dauerhaften Befestigen der Zugbändern, Strapse, Taue) zu einer beliebigen transportablen Ladungseinheit der mobilen Wärmespeicher-Vorrichtung (Anordnung einer mobilen Wärmespeicher-Vorrichtung mit Ladefläche) verbunden und fixiert werden, und damit für einen sicheren Transport der mobilen Wärmespeicher-Vorrichtung hergerichtet werden.

Damit ist ohne jegliche Schraubverbindungen eine kompakte, transportfähige Wärmespeicher-Vorrichtung von flexibler Packungsgröße erzielbar. Insbesondere wird eine dauerhaft sichere Ladungsverbindung der Ladungseinheit erzielt, die nicht jährlich revisioniert werden muss.

Die Aufgabe der Erfindung wird betreffs der Wärmespeicher-Vorrichtung auch durch eine Wärmedämmschale (Dämmschale) gelöst, welche die Speichermodule der Wärmespeicher-Vorrichtung allseitig umschließend angeordnet ist.

Die allseitig umschließende Dämmschale besteht vorzugsweise aus Sandwich-Paneelen mit einer Dämmschichtdicke von vorzugsweise 60 mm bei einer Wärmeleitfähigkeit (λ) des Gesamtsystems von 0,040 W/mK. Damit kann eine tägliche Wärmeverlustrate von nur 2,5% der Gesamtspeicherkapazität der Wärmespeicher-Vorrichtung eingehalten werden, was die Wärmeübertragungseffizienz in der Gesamtbilanz der Wärmespeicher-Vorrichtung zusätzlich verbessert. Mit dieser Dämmschale zum Wärmeschutz der Wärmespeicher-Vorrichtung kann unter Normbedingungen eine Eignung zur Kennzeichnung der Wärmespeicher-Vorrichtung mit dem Energielabel von A+ erreicht werden.

Die Dämmschale ist vorzugsweise in mehreren Schalenteilen ausgebildet, wobei hinsichtlich der Vorfertigung der Schalenteile die Teilung vorzugsweise in mehrere Bodenteile, einem Haubenteil und einem Seitenteil vorgesehen ist.

Die Teilung kann vorzugsweise auch in mehrere Bodenteile und einem Haubenteil vorgesehen sein.

Die einzelnen Bodenteile der Dämmschale bestehen aus vorgefertigten Bodenwand-Segmenten.

Das vorgefertigte Haubenteil der Dämmschale besteht beispielsweise aus drei Seitenwänden und einer Stirnwand oder aus drei Seitenwänden und zwei Stirnwänden.

Das vorgefertigte Seitenteil der Dämmschale bildet eine Stirnwand der Dämmschale.

Das vorgefertigte Seitenteil oder eine Stirnwand des Haubenteils kann teilweise oder vollständig als ein- oder mehrflügeliges Türblatt ausgebildet sein, das jeweils mittels Scharniere mit dem Haubenteil verbindbar oder vorgefertigt verbunden sind.

Damit kann beispielsweise im Herstellungsprozess einer Anordnung einer Wärmespeicher-Vorrichtung mit Wärmedämmschale zunächst die Bodenteile (Bodenwand-Segmente) an der Grundfläche der Gehäuse der zusammenzufügenden Speichermodule integriert / angebracht werden oder auf der Aufstellfläche der Wärmespeicher-Vorrichtung ausgelegt werden und nach Aufstellung der Speichermodule und Fertigstellung aller Anbauteile und Verbindungen an den Speichermodule der Wärmespeicher-Vorrichtung das Haubenteil seitwärts aufgeschoben oder aufgesetzt werden und ggf. zuletzt das Seitenteil frontseitig ergänzt werden.

Die Schalenteile können miteinander verschraubt, verriegelt und/oder verklebt sein. Die Stoßkanten der verbundenen Schalenteile können alternativ oder zusätzlich zur Verklebung umlaufende Gummilippen-Dichtungen aufweisen.

Diese Gestaltung der Schalenteile ermöglicht einen luftdichten, fugenarmen allseitigen Verschluss der Dämmschale um die die Speichermodule der Wärmespeicher-Vorrichtung, so dass die Dämmschale eine autarke Hülle bildet, und somit sowohl für eine Ausführung als stationäre, auf einer festen Aufstellfläche angeordnete Wärmespeicher-Vorrichtung (Anordnung einer stationären Wärmespeicher-Vorrichtung mit Dämmschale) als auch für eine Ausführung als mobile, auf einer transportablen Ladefläche angeordnete Wärmespeicher-Vorrichtung (Anordnung einer mobilen Wärmespeicher-Vorrichtung mit Ladefläche und Dämmschale) geeignet ist.

Die erfindungsgemäße Vorrichtung wird nachfolgend an zeichnerisch beschriebenen Ausführungsbeispielen näher erläutert.

Die zugehörigen Zeichnungen zeigen in einer schematischen Darstellung in
- Fig. 1a,b,c: Seitenansichten und isometrische Darstellung von drei Paketen zu je 9 Speichermodulen einer Wärmespeicher-Vorrichtung mit (3 x 9) 27 Speichermodulen,
- Fig. 1d: Detailansicht eines flexiblen Verbindungsstücks,
- Fig. 2a,b,c,d,e,f: Seitenansichten, Schnittdarstellungen und isometrische Darstellung eines Speichermoduls der Wärmespeicher-Vorrichtung nach Fig. 1a,b,c
- Fig. 3a,b,c,d: Seitenansichten, Schnittdarstellung und isometrische Darstellung einer Wärmespeicherplatte des Speichermoduls nach Fig. 2d,e,
- Fig. 4a,b,c: isometrische Darstellungen der Wärmespeicherplatte des Speichermoduls nach Fig. 2d,e,3a-d,
- Fig. 4d: Seitenansicht zweier wechselseitig übereinander gestapelter Wärmespeicherplatten des Speichermoduls nach Fig. 4a,b,c,
- Fig. 5a,b,c,d,f: Seitenansichten und isometrische Darstellung eines Einlassdeckel des Speichermoduls nach Fig. 2a-f,
- Fig. 5e: Detailansicht einer Prallplatte nach Fig. 5a,c,d,
- Fig. 6a,b,c,d,f: Seitenansichten und isometrische Darstellung eines Auslassdeckels des Speichermoduls nach Fig. 2a-f,
- Fig. 6e: Detailansicht eines Stromführungs-Elements nach Fig. 6a,d in Schnittdarstellung,
- Fig. 7a, b: isometrische Darstellung einer Wärmespeicher-Vorrichtung mit Speichermodul-Paketen nach Fig. 1a,b,c und mit Transport-Plattform, Verteilkanal und Sammelkanal,
- Fig. 8a: vergrößerte isometrische Darstellung des Verteilkanals nach Fig. 7a,b,
- Fig. 8b: vergrößerte isometrische Darstellung des Sammelkanals nach Fig. 7a, b,
- Fig. 9a: isometrische Darstellung der Wärmespeicher-Vorrichtung nach Fig. 1a,b,c, 7a,b mit einer Transport-Plattform und einer Dämmschale,
- Fig. 9b: isometrische Darstellung des Haubenteils und des Seitenteils der Dämmschale nach Fig. 9a,
- Fig. 9c,d: isometrische Darstellungen von Ausschnitten der Wärmespeicher-Vorrichtung mit den Bodenteilen (Bodenwand-Segmente) der Dämmschale nach Fig. 9a,
- Fig. 10: isometrische Darstellung der Wärmespeicher-Vorrichtung nach Fig. 1a,b,c, mit einer alternativen transportablen Ladefläche und einer alternativen Dämmschale,
- Fig. 11: isometrische Darstellung der Transport-plattform nach Fig. 10 mit Bodenteilen der Dämmschale.

In den im Folgenden erläuterten Ausführungsbeispielen wird auf die beigefügten Zeichnungen Bezug genommen, die einen Teil der Beispiele bilden und in denen zur Veranschaulichung spezifische Ausführungsformen gezeigt sind, in denen die Erfindung ausgeübt werden kann.

In dieser Hinsicht wird Richtungsterminologie wie etwa "oben", "unten", "vorne", "hinten", "vorderes", "hinteres" usw. mit Bezug auf die Orientierung der beschriebenen Figuren verwendet. Da Komponenten von Ausführungsformen in einer Anzahl verschiedener Orientierungen positioniert werden können, dient die Richtungsterminologie zur Veranschaulichung und ist auf keinerlei Weise einschränkend.

Es versteht sich, dass andere Ausführungsformen der Erfindung und strukturelle oder logische Änderungen der Erfindung von dem Schutzumfang der vorliegenden Erfindungsbeschreibung umfasst sind.

Es versteht sich zudem, dass die Merkmale der hierin beschriebenen verschiedenen beispielhaften Ausführungsformen miteinander kombiniert werden können, sofern nicht spezifisch anders angegeben.

Die folgende ausführliche Beschreibung der Ausführungsbeispielen ist deshalb nicht in einschränkendem Sinne aufzufassen.

In den Figuren werden identische oder ähnliche Elemente mit identischen Bezugszeichen versehen, soweit dies zweckmäßig ist.

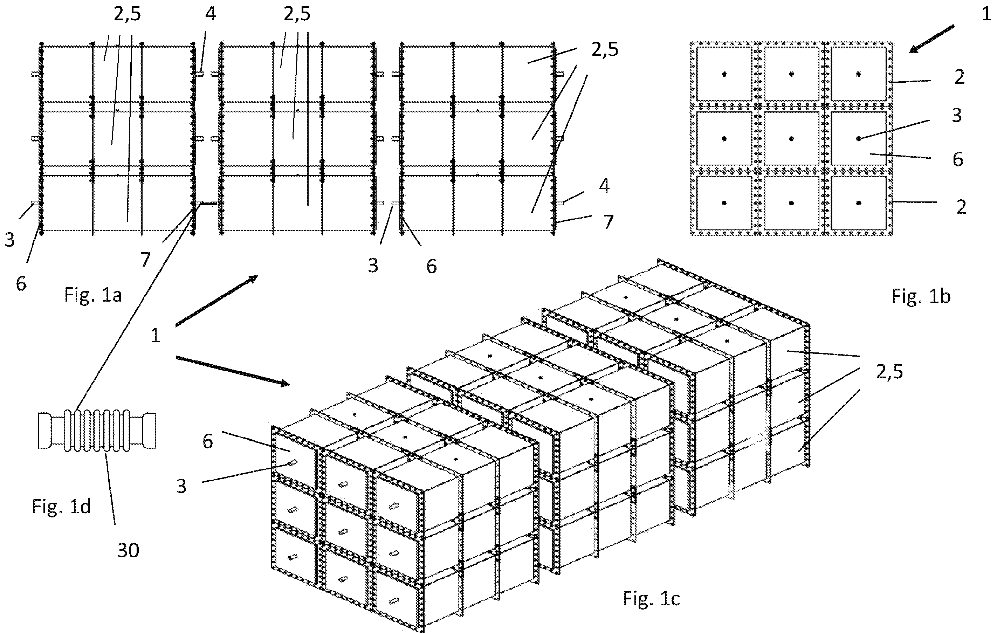

Die Figuren 1a,b,c zeigen drei vormontierte Pakete mit jeweils je neun Speichermodulen 2 für eine erfindungsgemäße Wärmespeicher-Vorrichtung 1 mit insgesamt 27 Speichermodulen.

Jedes Speichermodul 2 weist ein modular ausgebildetes Gehäuse 5 mit einem Einlassdeckel 6, an dem ein Strömungseingang 3 ausgebildet ist, und einem Auslassdeckel 7, an dem ein Strömungsausgang 4 ausgebildet ist, auf. Der Gehäusekorpus 5 weist zudem vier umlaufende und gelochte Flanschrahmen auf, wobei die beiden endständigen Flanschrahmen eines Speichermoduls 2 über eine Vielzahl an Schraubverbindungen mit dem Einlassdeckel 6 bzw. mit dem Auslassdeckel 7 verbunden sind.

Jedes Speichermodul 2 ist damit nach einem Baustein- oder Baukastenprinzip als Teil eines Ganzen einheitlich aufgebaut.

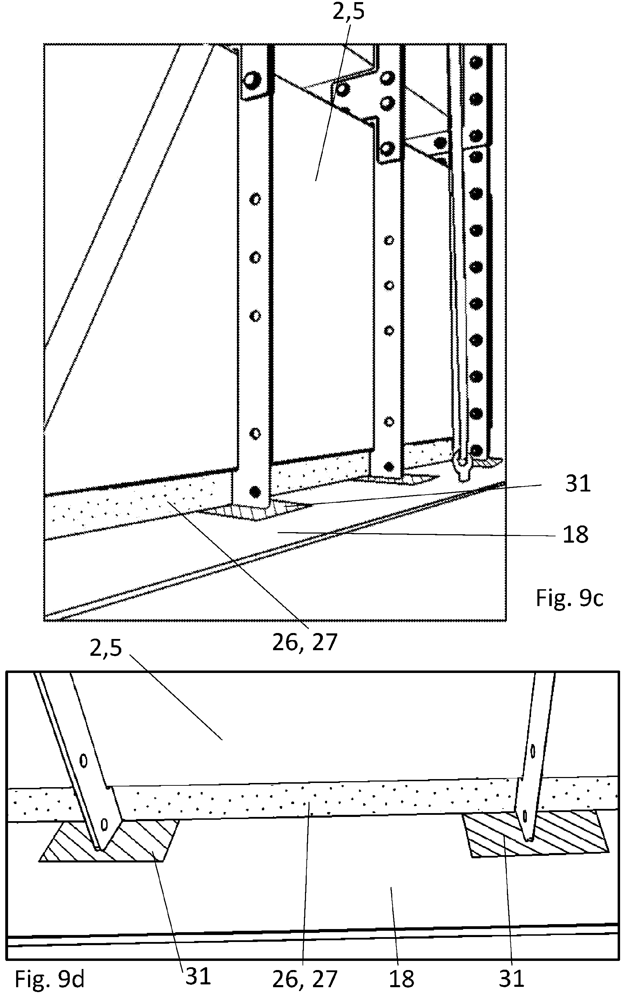

Die neun Speichermodule 2 eines jeden Pakets sind dreifach nebeneinander und übereinander angeordnet. Alle Speichermodule 2 desselben Pakets werden im Bereich ihrer umlaufenden Flanschrahmen mittels diverser Verbindungs-Elemente (wie z.B. T-stückförmige Lochbleche oder Lochblech-Bänder) und passender Schraubverbindungen miteinander verbunden (sichtbar auch in Fig. 9c).

Die Strömungsausgänge der Speichermodule 2 des ersten Pakets können z. B. jeweils mittels identischer Verbindungsstücke 30 mit den Strömungseingängen 3 der Speichermodule 2 des zweiten Pakets verbunden werden; weiter können die Strömungsausgänge 4 der Speichermodule 2 des zweiten Pakets jeweils mittels derartiger Verbindungsstücke 30 mit den Strömungseingängen 3 der Speichermodule 2 des dritten Pakets verbunden werden.

Es sind wärmetechnisch übliche unflexible oder flexible Verbindungsstücke 30 verwendbar, wobei nach diesem Ausführungsbeispiel beidseitig gemuffte Wellrohr-Abschnitte gemäß der Fig. 1d vorgesehen sind, welche neben transportbedingten Relativbewegungen der aneinander gefügten Speichermodule 2 auch thermisch bedingte Dehnungserscheinungen an den Speichermodulen 2 kompensieren können.

Bei dieser Verbindungsweise sind die neun Speichermodule 2 eines jeden Pakets zueinander in einer hydraulischen Parallelschaltung betreibbar, während die Speichermodule 2 des ersten, zweiten und dritten Pakets zueinander in einer hydraulischen Reihenschaltung betreibbar sind.

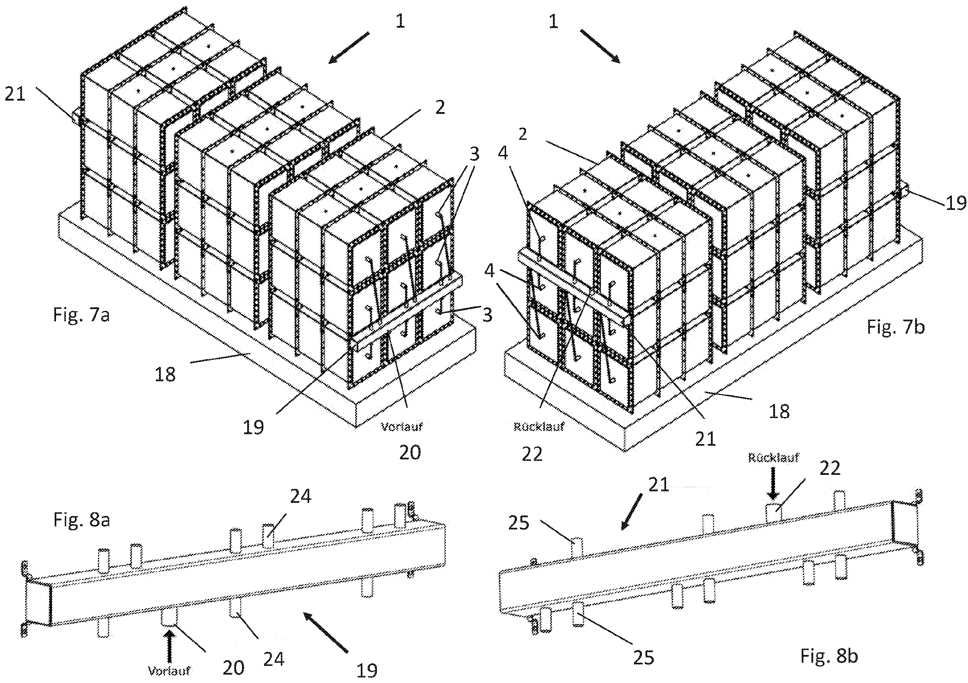

Ein Beispiel für eine mit den drei Paketen zu je neun Speichermodulen 2 komplettierte Wärmespeicher-Vorrichtung 1 ist aus den Figuren 7a und 7b ersichtlich.

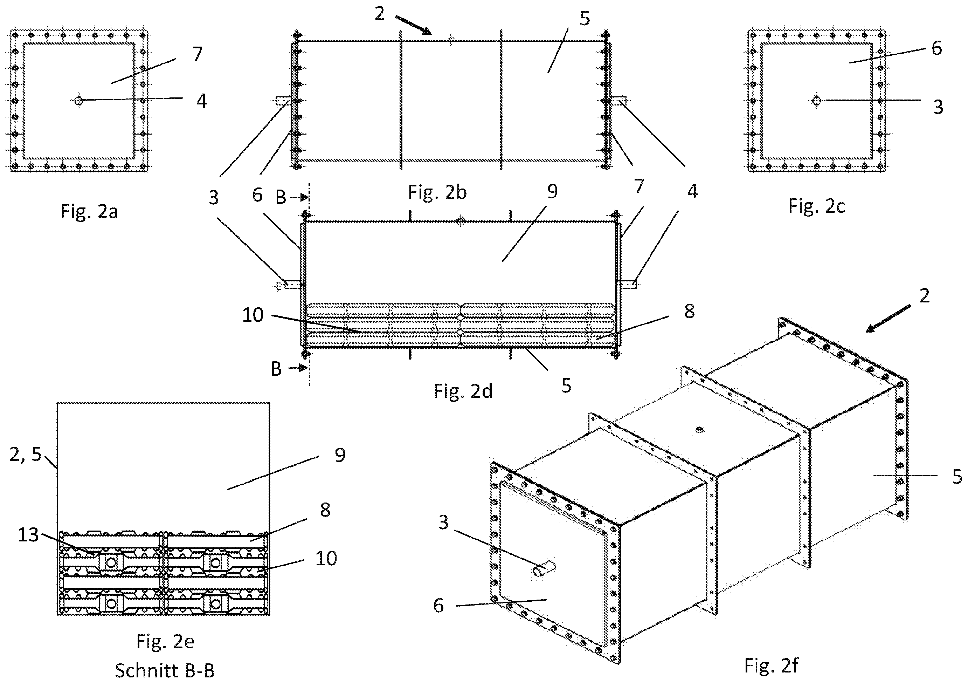

Die Figuren 2a bis 2f zeigen in verschiedenen Darstellungen ein erfindungsgemäßes Speichermodul 2 der Speichermodul-Pakete einer Wärmespeicher-Vorrichtung 1 nach Fig. 1a,b,c, 7a, b.

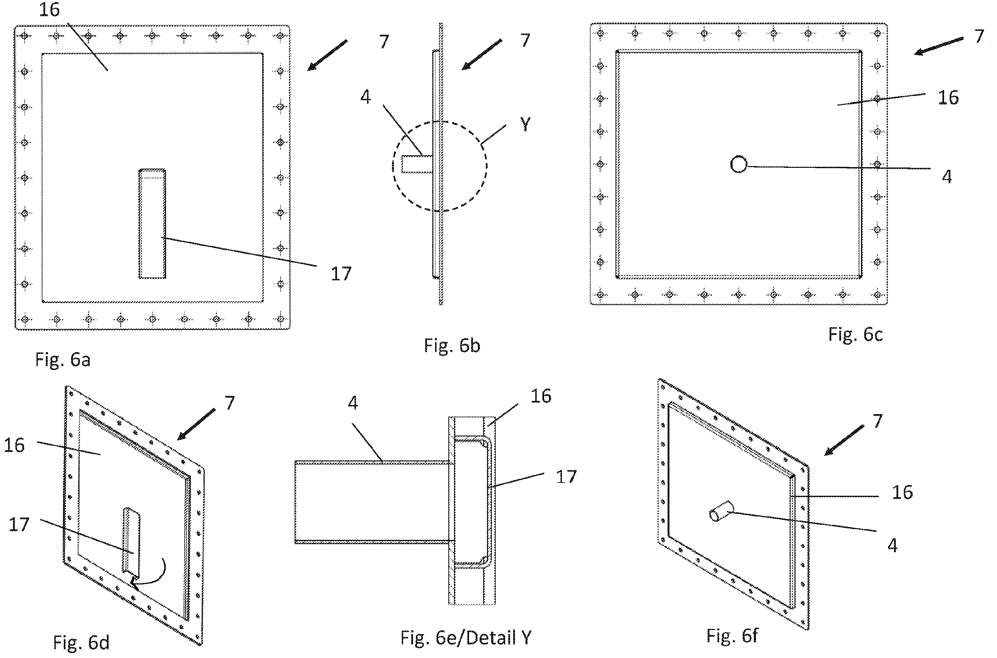

Die Fig. 2a stellt das Speichermodul 2 in einer Seitenansicht mit Blick auf die Abströmseite des Speichermoduls 2 dar, welche den Auslassdeckel 7 mit dem mittig angeordneten Strömungsausgang 4 zeigt. Die Ansicht zeigt näher, wie der Auslassdeckel 7 mittels einer Vielzahl von Verschraubungen dicht mit dem endständigen, umlaufenden Flanschrahmen des Gehäuses 5 des Speichermoduls 2 verbunden ist. Einzelheiten des Auslassdeckels 7 sind aus den Figuren 6a-6f zu entnehmen.

Die Fig. 2b zeigt in einer Seitenansicht mit Blick auf eine Längsseite des Speichermoduls 2 den längserstreckten Gehäusekorpus 5, der entlang seiner Längserstreckung in gleichmäßigen Abständen verteilt die vier umlaufenden Flanschrahmen aufweist (auch gut ersichtlich in Fig. 2f).

Der in Fig. 2b links gezeigte Pfeil verweist auf die Strömungsrichtung des auf der Einströmseite in den Strömungseingang 3 eintretenden Wärmetransportmediums 9.

Der in Fig. 2b rechts gezeigte Pfeil verweist auf die Strömungsrichtung des an der Abströmseite aus dem Strömungsausgang 4 austretenden Wärmetransportmediums 9.

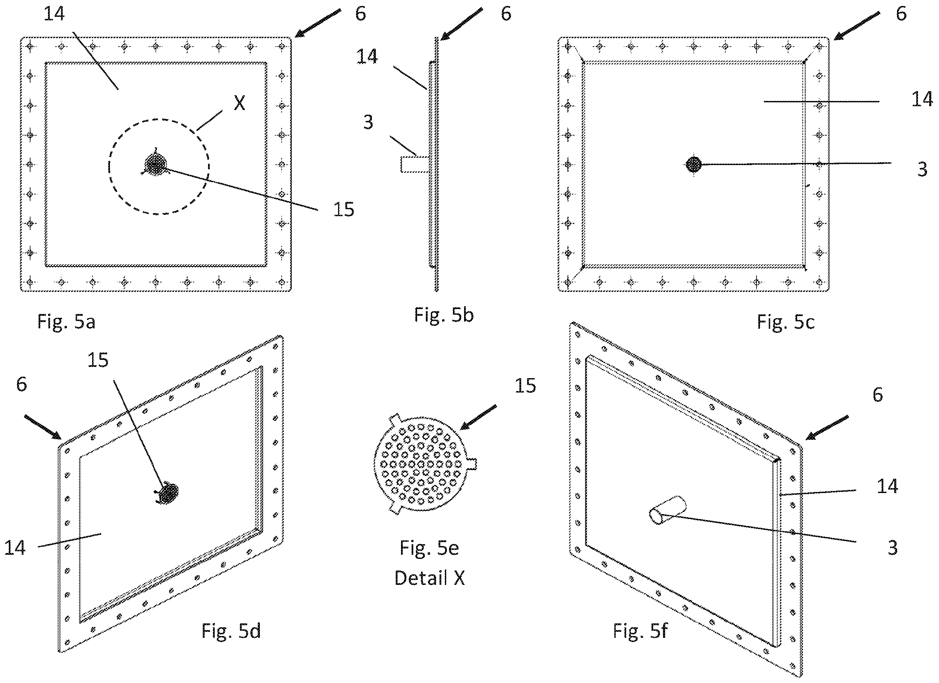

Die Fig. 2c stellt das Speichermodul 2 in einer Seitenansicht mit Blick auf die Anströmseite des Speichermoduls 2 dar, welche den Einlassdeckel 6 mit dem mittig angeordneten Strömungseingang 3 zeigt. Diese Ansicht zeigt näher, wie der Einlassdeckel 6 mittels einer Vielzahl von Verschraubungen dicht mit dem endständigen, umlaufenden Flanschrahmen des Gehäuses 5 des Speichermoduls 2 verbunden ist. Einzelheiten des Einlassdeckels sind aus den Figuren 5a-5f zu entnehmen.

Die Fig. 2d zeigt einen Längsschnitt durch das Speichermodul 2, der das Innere des Speichermoduls 2 sichtbar macht. In dem Speichermodul 2 sind insgesamt 80 identisch ausgeführte Wärmespeicherplatten 8 lose im Gehäuse gelagert, wobei insgesamt vier Stapel zu je 20 übereinander gestapelter Wärmespeicherplatten 8 angeordnet werden, so dass der Hohlraum des Gehäuses 5 im Wesentlichen gefüllt ist (siehe auch Fig. 2e, welches einen Querschnitt durch das Gehäuse 5 des Speichermoduls 2 zeigt).

Der Übersicht halber sind in den Figuren 2d und 2e nur 24 der insgesamt 80 Wärmespeicherplatten 8, nämlich vier Stapel zu je sechs übereinander gestapelte Wärmespeicherplatten 8, dargestellt.

Jede Wärmespeicherplatte 8 ist in luftdichter Makroverkapselung mit Latentspeichermaterial, wie z.B. mit Salzhydrat, gefüllt.

Das Gehäuse 5 und die Wärmespeicherplatten 8 sind maßlich so aufeinander abgestimmt, dass bei der Anordnung der Wärmespeicherplatten 8 im Gehäuse 5 gewisse Pufferzonen mit einem Spielmaß von jeweils ca. 0,5 mm zwischen den nebeneinander gelagerten Wärmespeicherplatten 8 und zwischen der jeweils wandnahen Wärmespeicherplatte 8 und der Gehäusewand des Gehäuses 5 für die thermische Ausdehnung der Wärmespeicherplatten 8 unter höheren Betriebstemperaturen des Wärmetransportmediums 9 verbleiben.

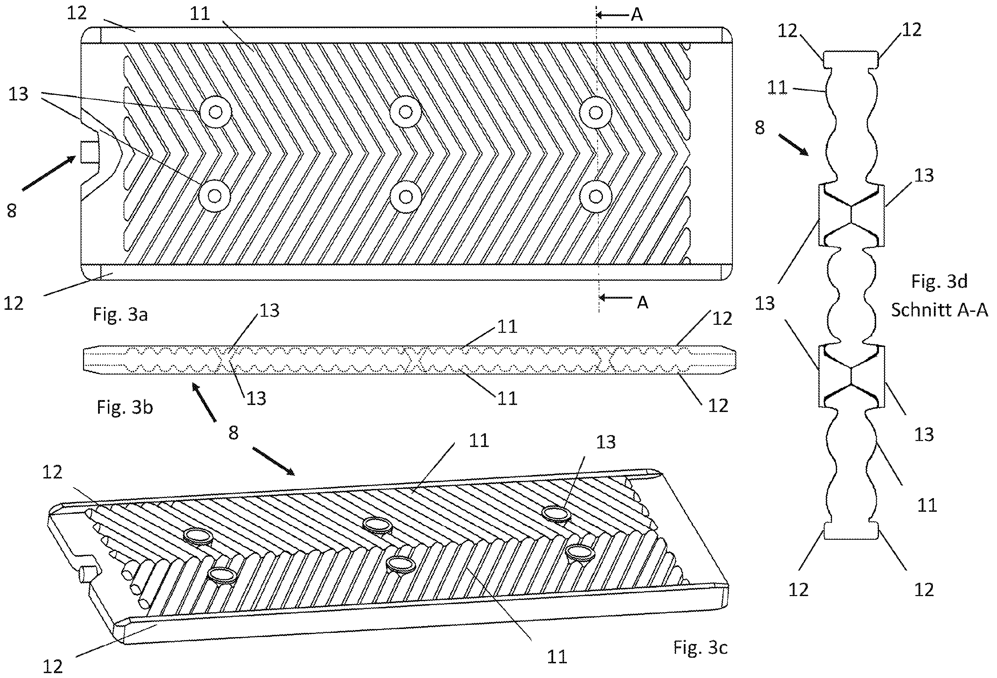

Die übereinander und nebeneinander gelagerten Wärmespeicherplatten 8 bilden mittels der beidseitig angeordneten Distanzelemente 12, 13 (siehe Fig. 3a-d) jeweils einen sehr flachen, horizontal erstreckten Strömungskanal 10 von definierter lichter Kanalhöhe und Kanalbreite zwischen den benachbarten, unmittelbar übereinander liegenden Wärmespeicherplatten 8. Die Distanzelemente 12, 13 weisen in dem Beispiel einheitlich ein identisches Überstandsmaß beidseitig über dem Oberflächenprofil der Wärmeübertragungsflächen 11 der Wärmespeicherplatten 8 auf.

Im Betriebsfall, bei Fluidtemperaturen von etwa größer 60°C, schließen die Wärmespeicherplatten 8 infolge ihrer Ausdehnung mit ihren Seitenwänden bündig aneinander und an das Gehäuse 5 an, so dass die Pufferzonen ausgefüllt sind und im Wesentlichen nur noch die flachen, horizontal erstreckten Strömungskanäle offen verbleiben.

Somit wird die Strömung des Wärmetransportmediums 9 durch diese im Wesentlichen gleichgroßen, engen Strömungskanäle 10 verlangsamt und gleichmäßig verteilt, um die Wärmeübertragung zwischen den Wärmespeicherplatten 8 und dem Wärmetransportmedium 9 zu steigern.

Ergänzend können die Wärmespeicherplatten 8 jeweils einen oder mehrere seitlich erstreckte Distanzelemente aufweisen, die seitliche Strömungskanäle mit einem Querschnitt von definierter lichter Kanalhöhe und Kanalbreite zwischen den benachbarten, unmittelbar nebeneinander liegenden Wärmespeicherplatten 8 bilden (hier nicht dargestellt).

Im Betriebsfall bei Fluidtemperaturen von größer 60°C schließen die Wärmespeicherplatten 8 infolge ihrer Ausdehnung mit ihren seitlich erstreckten Distanzelemente aneinander und an das Gehäuse 5 an, so dass die Pufferzonen ausgefüllt sind und im Wesentlichen nur die flachen, horizontal erstreckten Strömungskanäle und die zusätzlich seitlich gebildeten Strömungskanäle offen verbleiben (hier nicht dargestellt).

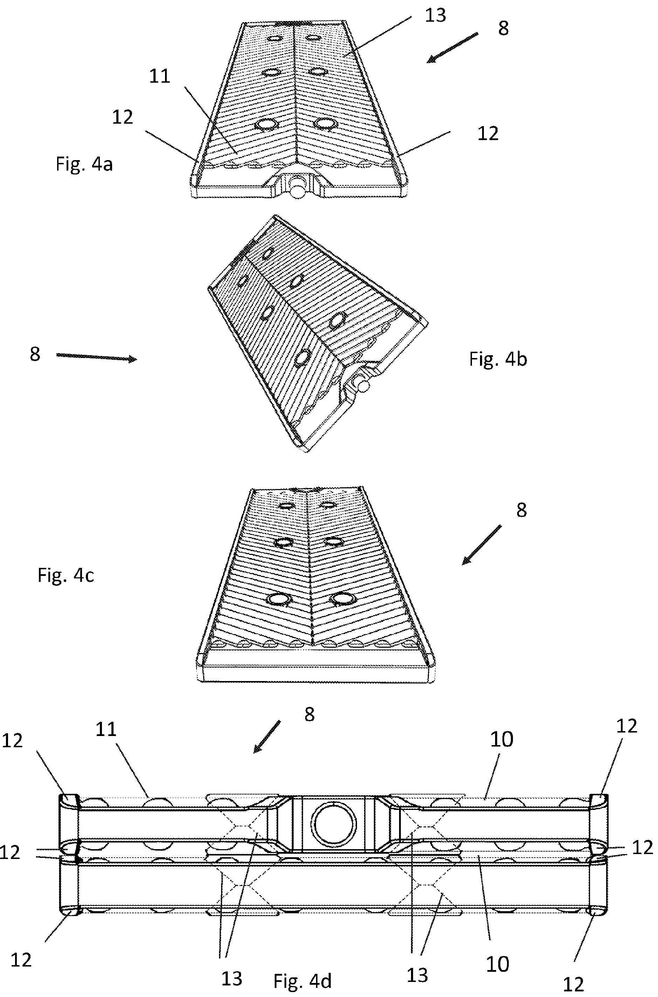

Die übereinander gestapelten Wärmespeicherplatten 8 sind zudem wechselseitig angeordnet, d.h. wechselnd mit dem vorderen Plattenende vorn (in Richtung der Anströmseite des Gehäuses 5 bzw. der Frontseite des Speichermoduls 2) liegend oder mit dem hinteren Plattenende vorn liegend (siehe auch Fig. 4d).

Die Figuren 3a bis 3d zeigen verschiedene Darstellungen der erfindungsgemäßen Wärmespeicherplatte 8, verwendet im Speichermodul 2 nach Fig. 2d,e.

Die Draufsicht nach Fig. 3a und 3c zeigen jeweils die obere Plattenfläche der Wärmespeicherplatte 8 mit einer Wärmeübertragungsfläche 11, welche ein spiegelsymmetrisch angeordnetes, geriffeltes Oberflächenprofil aufweist, so dass ein fischgrätenartiges Oberflächenprofil mit spiegelsymmetrisch schräg verlaufenden Grätenprofil gebildet ist.

Eine ebensolche Wärmeübertragungsfläche 11 mit spiegelsymmetrisch angeordneten, geriffelten Oberflächenprofil ist auf der unteren Plattenfläche der Wärmespeicherplatte 8 identisch ausgebildet.

Die Wärmespeicherplatte 8 weist verschieden ausgebildete Distanzelemente 12, 13 auf.

Zum einen sind vier Distanzelemente 12 in der Art von entlang der seitlichen, längserstreckten Ränder der Wärmespeicherplatte 8 längserstreckt ausgeformten Stege vorgesehen, deren Profil die Wärmeübertragungsfläche 11 der oberen und unteren Plattenfläche seitlich begrenzen und geringfügig, aber in einem definierten Überstandsmaß von ca. 1 mm über der Profilhöhe des Oberflächenprofils der Wärmeübertragungsfläche 11 der oberen und der unteren Plattenfläche überstehend ausgebildet sind (vergleiche Fig. 3b, 3d, 4a-4d).

Die Wärmespeicherplatte 11 weist zum anderen sechs über der oberen und der unteren Plattenfläche punktuell verteilt angeordnete Distanzelemente 13 in der Art von Noppen oder Puffer auf, die in die Wärmespeicherplatte 8 eingefügt sind, wobei sie den Innenraum der Wärmespeicherplatte 8 fluiddicht durchdringen und ebenfalls in dem gleichen Überstandsmaß wie die längserstreckten Stege über der Profilhöhe des Oberflächenprofils der Wärmeübertragungsfläche 11 der oberen und der unteren Plattenfläche überstehend ausgebildet sind (siehe Fig. 3b, 3d, 4a-4d)

In der vorgesehenen gestapelten Lagerung der Wärmespeicherplatten 8 bildet sich durch die Distanzelemente 12, 13 zwischen jeweils zwei unmittelbar übereinandergestapelte, benachbarter Wärmespeicherplatten 8 der horizontal erstreckte Strömungskanal 10 aus mit einem Mindestabstand zwischen den sich gegenüberliegenden, zueinander zugewandten Wärmeübertragungsflächen 11 der Wärmespeicherplatten 8 von ca. 2 mm , welcher in etwa der Kanalhöhe des Strömungskanals 10 entspricht, und mit einer Breite entsprechend des lichten Abstands der beiden vorstehend beschriebenen längserstreckt profilierten Stege 12, welche die seitlichen Kanalbegrenzungsflächen des Strömungskanals 10 ergeben (Fig. 4d).

Die flächig am unteren und oberen Gehäuseboden des Gehäuses 5 anliegenden Wärmespeicherplatten 8 bilden mittels der dem Gehäuse 5 zugewandten Distanzelemente 12, 13 einen Mindestabstand zwischen der Wärmeübertragungsfläche 11 der Wärmespeicherplatten 8 und der Gehäusewand von ca. 1 mm und damit ebenfalls jeweils einen horizontalen Strömungskanal aus.

Zur Angleichung der Kanalhöhe und damit der Strömungsquerschnitte dieser wandnahen Strömungskanäle an die Kanalhöhe bzw. Strömungsquerschnitte der sich zwischen den benachbarten Wärmespeicherplatten 8 ausbildenden Strömungskanäle 10 können die wandanliegenden Wärmespeicherplatten 8 derart ausgebildet sein, dass die dem Gehäuse 5 zugewandten Distanzelemente 12, 13 dieser wandanliegenden Wärmespeicherplatten 8 ein doppelt so großes Überstandsmaß, nämlich hier von 2mm, aufweisen (nicht dargestellt), womit ein noch besserer hydraulischer Abgleich aller sich bildenden Strömungskanäle erzielt werden kann.

In der im Weiteren vorgesehenen wechselseitigen Anordnung der so ausgebildeten und übereinander gestapelten Wärmespeicherplatten 8 weisen die zueinander zugewandten Wärmeübertragungsflächen 11 der benachbarten Wärmespeicherplatten 8, welche der oberen und unteren Kanalbegrenzungsfläche des Strömungskanals 10 entsprechen, ein konträres, zueinander gegenläufiges Oberflächenprofil (Grätenprofil) in der Form auf, dass beide Grätenprofile ein gedachtes Gittermuster im Strömungskanal 10 zwischen der oberen und unteren Kanalbegrenzungsfläche abbilden.

Die Figuren 5a bis 5f zeigen den erfindungsgemäßen Einlassdeckel 6 des Speichermoduls 2 nach den Figuren 2a- 2f.

Fig. 5a zeigt eine Draufsicht auf die Innenseite des Einlassdeckels 6, welche im Montagezustand des Einlassdeckels 6 dem Gehäuseinneren des Speichermoduls 2 zugewandt angeordnet ist.

Fig. 5d stellt den Einlassdeckel 6 mit Blick auf dessen Innenseite isometrisch dar.

Aus dieser Blickrichtung ist eine im Montagezustand dem Gehäuse 5 zugewandte Anschlussfläche des Flanschrahmens des Einlassdeckels 6 zum Anschluss an den Flanschrahmen des Gehäuses 5 und die Strömungsleiteinrichtung ersichtlich, welche einen Fluid-Verteilkasten 14 und eine Prallplatte 15 aufweist.

Der Fluid-Verteilkasten 14 ist aus einer ebenen Anschlussplatte (Kastenboden des Fluid-Verteilkastens 14) und einem aufgekanteten, an der Anschlussplatte anschließenden Rahmen gebildet, welcher sich auf der Außenseite des Einlassdeckels 6 über den Flanschrahmen hinaus erstreckt. Der Fluid-Verteilkasten 14 ist im Montagezustand des Einlassdeckels 6 in Richtung des Gehäuseinneren des Speichermoduls 2 offen ausgebildet.

Die Prallplatte 15 ist im Innenraum des Fluid-Verteilkastens 14 dem in der Anschlussplatte mündenden Strömungseingang 3 (hier nicht ersichtlich) gegenüberliegend und zugleich beabstandet von der Anschlussplatte angeordnet.

Die Bauteile der Strömungsleiteinrichtung sind derart ausgebildet, dass sie die Anschlussfläche des Flanschrahmens des Einlassdeckels 6 nicht überragen. Die beabstandete Prallplatte 15 schließt bündig mit der Anschlussfläche des Flanschrahmens ab (siehe Seitenansicht des Einlassdeckels 6 nach Fig. 5b).

Auf der dem Gehäuse 5 abgewandten Seite bildet die Anschlussplatte des Fluid-Verteilkasten 14 zugleich die Deckelfläche des Einlassdeckels 6, wie gut aus der Fig. 5c und 5f ersichtlich ist.

Fig. 5c und 5f zeigen eine Draufsicht bzw. eine isometrische Darstellung auf die Außenseite des Einlassdeckels 6, welche im Montagezustand des Einlassdeckels 6 dem Gehäuseinneren des Speichermoduls 2 abgewandt angeordnet ist.

Mittig auf der Deckelfläche des Einlassdeckels 6 ist der Strömungseingang 3 in der Art eines Anschlussstutzens zur Einströmung des Wärmetransportmediums 9 angeordnet, welcher in den Fluid-Verteilkasten 14 mit einer (nicht ersichtlichen) Öffnung mündet, die die beabstandete Prallplatte 15 genau gegenüber liegend und beabstandet überdeckt.

Die Prallplatte 15 besteht aus einem Lochblech mit definierter Lochgröße und Lochverteilung (siehe Fig. 5e), die mittels Abstandhalter an der Anschlussplatte des Fluid-Verteilkastens 14 befestigt ist.

Die gelochte Prallplatte 15 erzeugt neben einer intensiven vertikalen Umlenkung zugleich auch eine feine, weniger intensive horizontale Verteilung des über die Öffnung des Strömungseingangs 3 in den Fluid-Verteilkasten 14 einströmenden und auf die Prallplatte 15 auftreffenden Volumenstroms des Wärmetransportmediums 9.

Ein Großteil des Volumenstroms des Wärmetransportmediums 9 verteilt sich dadurch zunächst innerhalb des Hohlraums des Fluid-Verteilkasten 14 und damit im Wesentlichen quer zur eigentlichen Hauptströmungsrichtung des Wärmetransportmediums 9 durch das Gehäuse 5, wobei eine Verminderung der Strömungsgeschwindigkeit des Wärmetransportmediums 9 im Hohlraum des Fluid-Verteilkasten 14 und damit eine Strömungsberuhigung erfolgt - ggf. verbunden mit einer thermischen Homogenisierung des Volumenstroms des Wärmetransportmediums 9, bevor der Volumenstrom die bereitgehaltenen engen Strömungskanäle 10 zwischen den einzelnen Wärmespeicherplatten 8 passiert.

Die Strömungsleiteinrichtung dient damit vorrangig einer wirksamen strömungsberuhigten Verteilung des über den Strömungseingang 3 in das Speichermodul 2 eintretenden Wärmetransportmediums 9 über den gesamten frei zur Verfügung stehenden Strömungsquerschnitt des Gehäuses 5.

Die Figuren 6a bis 6f zeigen den erfindungsgemäßen Auslassdeckel 7 des Speichermoduls nach den Figuren 2a- 2f.

Fig. 6a zeigt eine Draufsicht auf die Innenseite des Auslassdeckels 7, welche im Montagezustand des Auslassdeckels 7 dem Gehäuseinneren des Speichermoduls 2 zugewandt angeordnet ist.

Fig. 6d stellt den Auslassdeckel 7 mit Blick auf dessen Innenseite isometrisch dar.

Aus dieser Blickrichtung ist eine im Montagezustand dem Gehäuse 5 zugewandte Anschlussfläche des Flanschrahmens des Auslassdeckels 7 zum Anschluss an den Flanschrahmen des Gehäuses 5 und die Strömungsleiteinrichtung ersichtlich, welche einen Fluid-Sammelkasten 16 und ein Stromführungs-Element 17 in der Gestalt eines Stromführungs-Kanals 17 aufweist.

Der Fluid-Sammelkasten 16 ist aus einer ebenen Anschlussplatte (Kastenboden des Fluid-Sammelkastens 16) und einem aufgekanteten, an der Anschlussplatte anschließenden Rahmen gebildet, welcher sich auf der Außenseite des Auslassdeckels 7 über den Flanschrahmen hinaus erstreckt. Der Fluid-Sammelkasten 16 ist im Montagezustand des Auslassdeckels 7 in Richtung des Gehäuseinneren des Speichermoduls 2 offen ausgebildet.

Der Stromführungs-Kanal 17 ist im Innenraum des Fluid-Sammelkastens 16 der Mündung des Strömungsausgangs 4 (hier nicht sichtbar) in der Anschlussplatte des Auslassdeckels 7 gegenüberliegend und zugleich diese Mündung hohl überdeckend an der Anschlussplatte angeordnet.

Die Bauteile dieser Strömungsleiteinrichtung sind ebenfalls derart ausgebildet, dass sie die Anschlussfläche des Flanschrahmens des Auslassdeckels 7 nicht überragen. Der beabstandete Stromführungs-Kanal 17 schließt bündig mit der Anschlussfläche des Flanschrahmens ab (siehe Seitenansicht des Auslassdeckels 7 nach Fig. 6b).

Auf der dem Gehäuse 5 abgewandten Seite bildet die Anschlussplatte des Fluid-Sammelkastens 16 zugleich die Deckelfläche des Auslassdeckels 7, wie gut aus der Fig. 6c und 6f ersichtlich ist.

Fig. 6c und 6f zeigen eine Draufsicht bzw. eine isometrische Darstellung auf die Außenseite des Auslassdeckels 7, welche im Montagezustand des Auslassdeckels 7 dem Gehäuseinneren des Speichermoduls 2 abgewandt angeordnet ist.

Mittig auf der Deckelfläche des Auslassdeckels 7 ist der Strömungsausgang 4 in der Art eines Anschlussstutzens zur Ausströmung des Wärmetransportmediums 9 angeordnet, welcher in den Fluid-Sammelkasten 16 mit einer Öffnung mündet, die von dem Stromführungs-Kanal 17 beabstandet überdeckt ist (gut ersichtlich in Fig. 6e).

Der Stromführungs-Kanal 17 besteht aus einem kurzen, U-profilförmigen Kanalabschnitt, dessen Kanalquerschnitt eines Endes geschlossen ausgebildet ist und anderen Endes, das in diesem Ausführungsbeispiel in Richtung der Aufstellfläche des Speichermoduls 2 (Gehäuseboden) weist, offen ausgebildet ist (Fig. 6a, 6d).

Diese Strömungsleiteinrichtung erzeugt zunächst im Querschnitt des Fluid-Sammelkasten 16 eine Sammlung des Wärmetransportmediums 9 unter Verminderung der Strömungsgeschwindigkeit der aus den engen Strömungskanälen 10 in den Fluid-Sammelkasten 16 übertretenden Volumenstromes des Wärmetransportmediums 9 und damit eine Strömungsberuhigung und eine erste thermische Durchmischung und Homogenisierung der nach dem Durchströmen durch die Strömungskanälen 10 teilweise unterschiedlich temperierten und thermisch geschichtet vorherrschenden Fluidmengen des Wärmetransportmediums 9. In der nachfolgenden geführten Zwangsströmung des gesamten Volumenstromes des Wärmetransportmediums 9 durch den Kanalquerschnitt des Stromführungs-Kanals 17 werden die thermisch geschichteten Fluidmengen des Wärmetransportmediums 9 noch intensiver thermisch durchmischt, bevor der Volumenstrom über den Strömungsausgang 4 aus dem Speichermodul 2 austritt.

Mit der Ausrichtung des offenen Kanalendes in Richtung des Gehäusebodens wird zudem verhindert, dass sich gewöhnlich in Bodennähe ansammelnde niedrig temperierte Fluidmengen bei der Ausleitung aus dem Speichermodul 2 nicht mit erfasst werden.

Diese Strömungsleiteinrichtung dient damit einer wirksamen thermischen Homogenisierung des gesamten Volumenstroms des Wärmetransportmediums 9 durch das Speichermodul 2 und führt damit zu einer gleichmäßigeren Temperatur des Wärmetransportmediums 9, bevor das Wärmetransportmedium 9 dem Strömungseingang 3 eines nachfolgenden Speichermoduls 2 zugeführt wird.

Die Figuren 7a und 7b zeigen in isometrischen Darstellungen eine Wärmespeicher-Vorrichtung 1 mit den zu den Figuren 1a,b,c beschriebenen, untereinander mittels einzelner, identischer Verbindungsstücke 30 verbundenen Speichermodul-Paketen, welche auf einer transportablen Ladefläche 18, hier eine handelsübliche Transport-Plattform 18, angeordnet und verrutsch-sicher fixiert sind.

Die verrutsch-sichere Befestigung der Speichermodul-Pakete erfolgt im Ausführungsbeispiel mittels Zugbänder, die durch Befestigungsösen der Transport-Plattform 18 und um die Speichermodul-Pakete geführt sind und mithilfe von Dynablock-Verschlüssen fest verspannt werden (auszugsweise ersichtlich in Fig. 9c).

Die Wärmespeicher-Vorrichtung 1 weist weiter einen Verteilkanal 19 und einen Sammelkanal 21 auf, welcher aus jeweils einem kastenförmigen, längserstreckten Kanalabschnitt besteht.

An dem Kanalabschnitt des Verteilkanals 19 sind neben einem Anschlussstutzen 20 für eine Zulaufleitung aus einem externen, nicht dargestellten Fluidleitungssystem neun Anschlussstutzen 24 für die Anbindung der Strömungseingänge 3 der parallel geschalteten Speichermodule 2 eines der 9-fach-Speichermodul-Pakete ausgebildet (Fig. 8a).

An dem Kanalabschnitt des Sammelkanals 21 sind neben einem Anschlussstutzen 22 für eine Rücklaufleitung in das externe, nicht dargestellte Fluidleitungssystem neun Anschlussstutzen 25 für die Anbindung der Strömungsausgänge 4 der parallel geschalteten Speichermodule 2 eines der 9-fach-Speichermodul-Pakete ausgebildet (Fig. 8b).

Der Verteilkanal 19 ist an der Anströmseite der Speichermodule 2 des in der Reihenanordnung vorgesehenen ersten Speichermodul-Pakets angeordnet und mittels einzelner Verbindungsleitungen 23 mit identischem Strömungsquerschnitt hydraulisch mit den neun Strömungseingängen 3 der parallel geschalteten Speichermodule 2 des ersten Speichermodul-Pakets verbunden, wobei der Kanalabschnitt horizontal erstreckt zwischen einer unteren Zeile von drei nebeneinander angeordneten Speichermodulen 2 und einer mittleren Zeile von drei nebeneinander angeordneten Speichermodulen 2 positioniert ist (Fig. 7a).

Der Sammelkanal 21 ist an der Abströmseite der Speichermodule 2 des in der Reihenanordnung vorgesehenen dritten Speichermodul-Pakets angeordnet und mittels einzelner Verbindungsleitungen 23 mit identischem Strömungsquerschnitt hydraulisch mit den neun Strömungsausgängen 4 der parallel geschalteten Speichermodule 2 des dritten Speichermodul-Pakets verbunden, wobei der Kanalabschnitt horizontal erstreckt zwischen der mittleren Zeile der drei nebeneinander angeordneten Speichermodule 2 und der oberen Zeile der drei nebeneinander angeordneten Speichermodule 2 positioniert ist (Fig. 7b).

Verteilkanal 19 und Sammelkanal 21 sind damit zueinander höhenversetzt angeordnet.

Die Anschlussstutzen 24 für die Strömungseingänge 3 bzw. die Anschlussstutzen 25 für die Strömungsausgänge 4 sind jeweils so an den Kanalabschnitten des Verteilkanals 19 bzw. Sammelkanals 21 angeordnet, dass die Strömungseingänge 3 bzw. die Strömungsausgänge 4 mittels der jeweiligen Verbindungsleitungen 23 geradlinig auf kürzestem Wege mit dem Verteilkanal 19 bzw. dem Sammelkanal 21 verbunden sein können.

Die Gesamtlänge (Rohrleitungslänge) der Verbindungsleitung 23 vom Kanalabschnitt des Verteilkanals 19 zum Strömungseingang 3 eines Speichermoduls 2 des ersten Speichermodul-Pakets und der Verbindungsleitung 23 vom Strömungsausgang 4 des in derselben Reihe nachgeschalteten Speichermoduls 2 des dritten Speichermodul-Pakets zum Kanalabschnitt des Sammelkanals 21 ist annähernd gleich der Gesamtlänge (Rohrleitungslänge) der Verbindungsleitungen 23 eines jeden in Strömungsrichtung nebengeordneten, also parallel geschalteten Speichermoduls 2 des ersten Speichermodul-Pakets und des in derselben Reihe nachgeschalteten Speichermoduls 2 des dritten Speichermodul-Pakets.

Hierdurch sind die Gesamtlänge der Verbindungsleitungen 23 (Rohrleitungslänge) der jeweils parallel geschalteten Speichermodule 2 des ersten und dritten Speichermodul-Pakets auf dem Strömungsweg vom Kanalabschnitt des Verteilkanals 19 zum Strömungseingang 3 und vom Strömungsausgang 4 zum Kanalabschnitt des Sammelkanals 21 jeweils im Wesentlichen gleich.

Da infolge der modularen Bauweise der Speichermodul-Pakete und damit der Wärmespeicher-Vorrichtung 1 auch die Längen und Strömungswiderstände der Verbindungsstücke 30 zwischen dem ersten und zweiten Speichermodul-Paket sowie zwischen dem zweiten und zweiten Speichermodul-Paket untereinander gleich sind, ist in dieser Weise eine hydraulische Verbindung der parallel geschalteten Speichermodule 2 der drei Speichermodul-Pakete realisiert, bei der diese einen im Wesentlichen gleichgroßen Strömungswiderstand aufweisen und dadurch mit einem gleichmäßig verteilten Volumenstrom des Wärmetransportmedium 9 beaufschlagt werden.

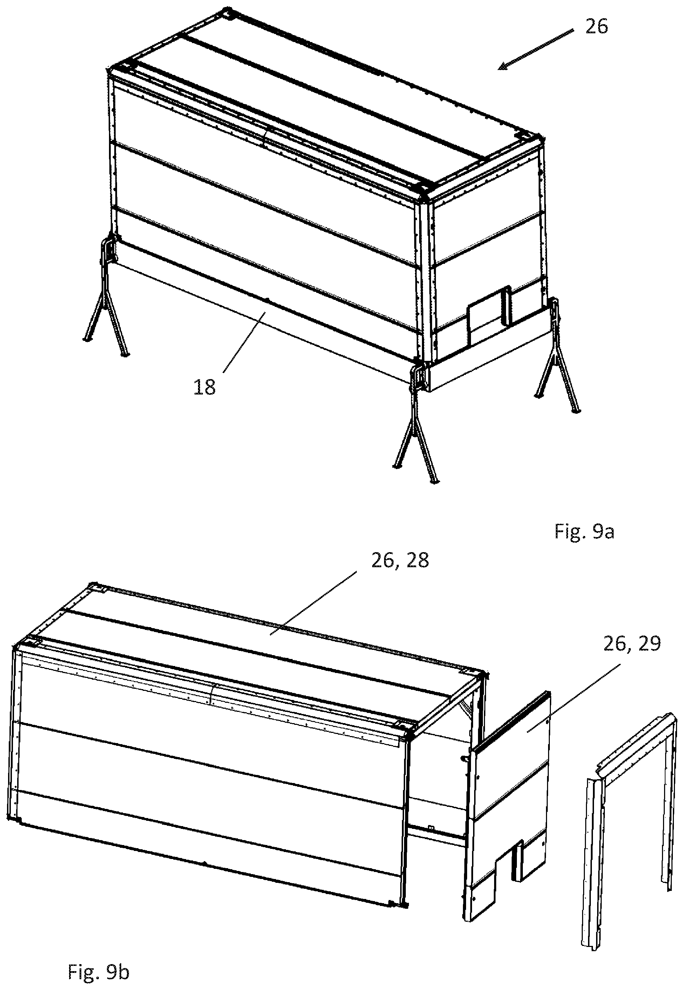

Fig. 9a zeigt eine isometrische Darstellung der Wärmespeicher-Vorrichtung 1 nach Fig. 1a,b,c, 7a,b mit der Transport-Plattform 18 und einer die Speichermodule 2 der Wärmespeicher-Vorrichtung 1 umschließende Dämmschale 26.

Die umschließende Dämmschale 26 weist einen innenliegenden, kastenförmigen Profilrahmen aus metallischen Hohlprofilen, wie zum Beispiel aus Aluminium-Hohlprofilen, und eine Verkleidung des Profilrahmens aus aneinander gefügten Paneelen auf, die in Sandwichbauweise ausgebildet sind und in diesem Beispiel vorzugsweise aus Hartschaum-Sandwichplatten mit teilweiser Aluminium-Kaschierung bestehen, welche jeweils einen Gesamt-Wärmeleitkoeffizient λ von 0,040 W/mK und eine Dämmschichtdicke von 60 mm aufweisen. Zur Realisierung einer besonders hohen Druckfestigkeit und Temperaturbeständigkeit der Dämmschale werden Sandwichplatten mit einem Polyisocyanurat- bzw. Polyiso-Hartschaum (PIR) verwendet.

Zwischen der umschließenden Dämmschale 26 und der Wärmespeicher-Vorrichtung 1 ist eine Luftschicht vorgesehen, die außenseitig um die Wärmespeicher-Vorrichtung 1 umlaufend mit ca. 15 cm Schichtdicke ausgebildet ist. Abweichend davon ist bodenseitig im Wesentlichen keine Luftschicht vorgesehen. Oberhalb der der Wärmespeicher-Vorrichtung 1 kann eine Luftschicht mit beliebiger Schichtdicke entsprechend der konstruktiven Anforderungen an die Transporteinheit vorgesehen sein. Im Ausführungsbeispiel ist eine Luftschicht mit ca. 40 cm Schichtdicke vorhanden.

In dieser beispielhaften Ausführung der Wärmeschutzdämmung kann eine tägliche Wärmeverlustrate von maximal 2,5% der Gesamtspeicherkapazität der Wärmespeicher-Vorrichtung 1 eingehalten werden.

Die Fig. 9b verdeutlicht, dass die Dämmschale 26 in mehrere Schalenteile unterteilt ausgebildet ist, wobei in diesem Beispiel die Teilung in mehrere Bodenteile 27, einem Haubenteil 28 und einem Seitenteil 29 vorgesehen ist, welche jeweils aus Segmenten von zusammengefügten, vorzugsweise miteinander verklebten Paneelen aus dem Material der Dämmschale 26 vorgefertigt bereitgestellt sind.

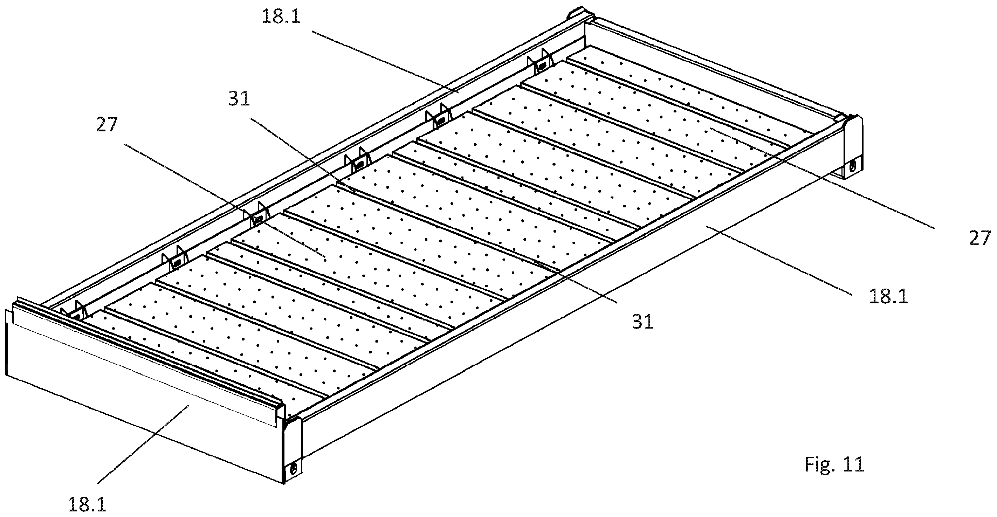

Die vorgefertigten Bodenteile 27 der Dämmschale 26 bestehen aus mehreren einzelnen Bodenwand-Segmenten 27 (siehe Fig. 9c, d, analoge Ausführung in Fig. 11). Die Bodenwand-Segmente 27 der Dämmschale 26 werden passgenau entsprechend der Abstandsmaße der Flanschrahmen der Speichermodule auf der Transportplattform 18 ausgebildet und ausgelegt, bevor die Speichermodul-Pakete auf die so vorbereitete Transport-Plattform 18 aufgestellt werden.

Das vorgefertigte Haubenteil 28 der Dämmschale 26 weist drei Seitenwand-Segmente und ein Stirnwand-Segment auf, die mittels Schraubverbindungen an dem innenliegenden Profilrahmen vormontiert sind. Das vorgefertigte Haubenteil 28 kann seitwärts auf die Wärmespeicher-Vorrichtung 1 aufgeschoben werden und diese damit in einem Verfahrensschritt vierseitig umschließen.

Das vorgefertigte Seitenteil 29 der Dämmschale 26 besteht aus einem Stirnwand-Segment, welches mittels Schraubverbindungen lösbar am frontseitigen Profilrahmen befestigt werden kann und die Wärmespeicher-Vorrichtung 1 frontseitig verschließt.

Die vorgefertigten Teile (Haubenteil 28 und Seitenteil 29) weisen zueinander gerichtete umlaufende Gummilippen-Dichtungen auf und werden nach dem Aufschieben oder Aufsetzen auf die Transport-Plattform 18 weitestgehend fugenarm und luftdicht miteinander verbunden, wobei die vorgefertigten Teile (Haubenteil 28 und Seitenteil 29) bündig an die Transport-Plattform 18 anschließen und mit dieser verschraubt sind.

Gegenüber der Transport-Plattform 18 ist die montierte Dämmschale 26 beispielsweise mittels einer Quellband-Gummidichtung versiegelt, womit die Wärmespeicher-Vorrichtung 1 auch hier weitestgehend luftdicht verschlossen ist.

Zusätzlich vorgesehene Abdeckprofile im Bereich der Kanten und Ecken der Dämmschale 26 dienen einerseits einem mechanischen Schutz der Dämmschale 26 und können andererseits durch eine bündige Montage die Luftdichtigkeit der Dämmschale 26 weiter erhöhen.

Das frontseitige Stirnwand-Segment des Seitenteils 29 verfügt über eine kleine Öffnung, um diverse Wartungs- und Bedienfunktionen an der Wärmespeicher-Vorrichtung 1 ausüben zu können, insbesondere um beispielsweise einen temporären oder dauerhaften Anschluss der Vorlaufleitung (Vorlauf) bzw. der Rücklaufleitung (Rücklauf) des externen Fluidleitungssystems an die Zulaufleitung bzw. Rücklaufleitung der Wärmespeicher-Vorrichtung 1 zu ermöglichen (Übergabeort vom bzw. an das externe Fluidleitungssystem).

Die Zulaufleitung zum Verteilkanal 19 der Wärmespeicher-Vorrichtung 1 und die Rücklaufleitung vom Sammelkanal 21 der Wärmespeicher-Vorrichtung 1 werden jeweils in den Bereich der kleinen Öffnung geführt und können mit einem z.B. an der Transport-Plattform 18 und/oder der Dämmschale 26 fixierten Anschlussstutzen endend ausgebildet sein. Die Zulaufleitung zum Verteilkanal 19 und die Rücklaufleitung vom Sammelkanal 21 der Wärmespeicher-Vorrichtung können vorzugsweise flexible Leitungsabschnitte aus Kunststoff oder Metall sein (nicht dargestellt), welche mögliche transportbedingte oder thermisch bedingte Relativbewegungen der Speichermodul-Pakete gegenüber der Transport-Plattform 18 und/oder der Dämmschale 26 kompensieren können.

Die Anschlussstutzen der Zulaufleitung und der Rücklaufleitung sind vorzugsweise mit Bajonette-Schnellverbinder ausgebildet (nicht dargestellt).

Auch weitere Funktionselemente der Wärmespeicher-Vorrichtung 1, wie z.B. Regelungs-, Steuerungs- und Messelemente, können zur leichteren Bedienung und Wartung der Wärmespeicher-Vorrichtung 1 vorzugsweise im Bereich dieser Öffnung angeordnet sein (nicht dargestellt).

Die Öffnung kann mit einem Deckel, bestehend aus vorzugsweise dem Material der Dämmschale 26, verschließbar sein (nicht dargestellt), um Wärmebrücken zu vermeiden. Der Deckel kann Aussparungen für die Durchführung und Montage der Anschlussstutzen der Vorlaufleitung und der Rücklaufleitung des externen Fluidleitungssystems aufweisen.

Aus den Figuren 9c und 9d sind in isometrischen Darstellungen jeweils Ausschnitte der auf der Transport-Plattform 18 fixierten Wärmespeicher-Vorrichtung 1 im Bereich eines Speichermoduls 2 wie nach Fig. 7a, b, gezeigt.

Die mittels der Zugbänder verzurrten Speichermodule 2 der Wärmespeicher-Vorrichtung 1 sind mit ihren bodenseitigen Abschnitten ihrer umlaufenden Flanschrahmen - abgesehen von einer Zwischenlage aus einem schmalen, gummierten Antirutschstreifen 31 im Aufliegebereich des Flanschrahmens - unmittelbar auf der Transport-Plattform 18 platziert.

In den sich ergebenden Zwischenräumen zwischen der Transport-Plattform 18 und dem Gehäuseboden 5 eines jeden Speichermoduls 2 , seitlich begrenzt durch die benachbarten Flanschrahmen der Speichermodule 2, sind jeweils Bodenwand-Segmente als Bodenteile 27 der Dämmschale 26 angeordnet, welche maßlich so beschaffen sind, dass sie diese Zwischenräume sowohl in der horizontalen als auch in der vertikalen Erstreckung weitestgehend vollständig ausfüllen, d.h. sie schließen horizontal an die bodenseitigen Abschnitte der Flanschrahmen an und vertikal an den Gehäuseboden 5 der Speichermodule 2 an (gut sichtbar in Fig. 9c, 9d).

Das bündig an der Transport-Plattform 18 anschließende Haubenteil 28 und Seitenteil 29 (hier nicht dargestellt) schaffen eine seitlich umlaufende Überdeckung der Bodenwand-Segmente 27, womit eine allseitig die Wärmespeicher-Vorrichtung 1 umschließende, gegenüber der Umgebung fugenarme Dämmschale 26 gebildet ist, die durch die vorbeschriebenen Dichtungen auch weitestgehend luftdicht ist. Die Dämmschale 26 bildet eine autarke Hülle von hoher Wärmeschutzwirkung um die auf der Transport-Plattform 18 angeordnete Wärmespeicher-Vorrichtung 1 (Anordnung einer mobilen Wärmespeicher-Vorrichtung 1 mit Ladefläche 18 und Dämmschale 26).

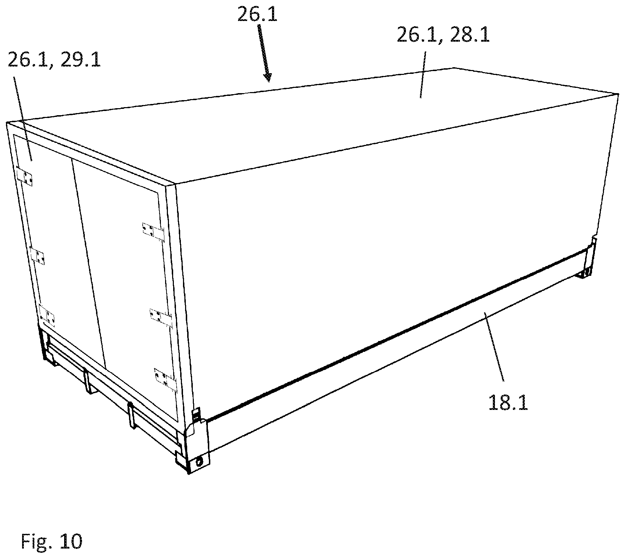

Die Fig. 10 zeigt eine Wärmespeicher-Vorrichtung mit einer alternativ ausgebildeten transportablen Ladefläche 18.1 und einer alternativ ausgebildeten Dämmschale 26.1.

Nachfolgend werden lediglich die Unterschiede gegenüber der Ausführung der Transport-Plattform 18 nach Fig. 9a, c, d und der Dämmschale 26 nach den Figuren 9a bis 9d beschrieben.

Die alternative transportablen Ladefläche 18.1 unterscheidet sich gegenüber der vorbeschriebenen handelsüblichen Transport-Plattform 18 nach Fig. 9a, c, d im Wesentlichen in einer deutlich abweichenden Formgebung, wie in Fig. 11 gezeigt.

Anstelle der ebenen Plattformfläche der Transport-Plattform 18 weist diese transportable Ladefläche 18.1 konstruktiv eine umlaufend ausgebildete Aufkantung auf, auf welcher das Haubenteil 28.1 und das Seitenteil 29.1 der alternativen Dämmschale 26.1 aufgesetzt oder bündig an dieser angesetzt werden kann.

Die umlaufende Aufkantung führt bereits mit einer geringfügigen Höhe zu einer Verbesserung der Biegesteifigkeit der Gesamtkonstruktion der transportablen Ladefläche 18.1 und damit zu einer hohen Stabilität, die folglich eine erhebliche Masseneinsparung an Material und Bauteildicke der Ladefläche und damit eine bedeutende Gewichtseinsparung an der Gesamtkonstruktion der transportablen Ladefläche 18.1 ermöglicht.

Die umlaufende Aufkantung ermöglicht im Weiteren eine stabilere Fixierung des Haubenteils 28.1 und des Seitenteils 29.1

Die alternative Dämmschale 26.1 unterscheidet sich gegenüber der Dämmschale 26 nach Fig. 9a-9d im Wesentlichen in der Ausführung des Haubenteils 28 mit alternativen Profilrahmen und in der Ausführung des Seitenteils 29.

Die Dämmschale 26.1 umfasst anstelle des innenliegenden, kastenförmigen Profilrahmens der Dämmschale 26 einen flächigen Profilrahmen, der frontseitig das Haubenteil 28.1 einfasst und mit diesem verschraubt ist (siehe Fig. 10).

Die drei Seitenwand-Segmente und das Stirnwand-Segment des Haubenteils 28.1 sind im Wesentlichen nur durch Verklebung untereinander verbunden. In Verbindung mit dem frontseitig befestigten Profilrahmen und der Fixierung an der umlaufenden Aufkantung der transportablen Ladefläche 18.1 wird eine ausreichende Eigenstabilität des Haubenteils 28.1 erreicht, wonach auf den innenliegenden kastenförmigen Profilrahmen verzichtet werden kann.

Dies führt im Ergebnis zusätzlich zu einer wesentlichen Gewichtseinsparung an der Dämmschale 26.1 von etwa zwei Drittel gegenüber der Dämmschale 26.

Das vorgefertigte Seitenteil 29.1 der Dämmschale 26.1 besteht im Unterschied zum Stirnwand-Segment des Seitenteils 29 aus zwei hälftigen Stirnwand-Segmenten, die als Türflügel ausgebildet sind, welche jeweils mittels Scharniere mit dem flächigen Profilrahmen des Haubenteils 28.1 verbunden sind und durch Verriegelungen oder Schraubverbindungen verschließbar sind.

Damit ist die im Seitenteil 29 der Dämmschale 26 vorgesehene verschließbare Öffnung für Wartungs- und Bedienfunktionen entbehrlich.

Selbsterklärend ist es auch möglich, dass das vorgefertigte Seitenteil 29.1 der Dämmschale 26.1 lediglich als ein einziger Türflügel ausgebildet ist.

Über diese Türkonstruktion ist die Wärmespeicher-Vorrichtung 1 frontseitig noch leichter für Wartungs- und Bedienzwecke zugänglich, ohne dass die Türkonstruktion die Massenbilanz der Dämmschale 26.1 nennenswert beeinflusst.

Um die Türöffnung des Haubenteils 28 und um die Türblätter des Seitenteils 29.1 sind umlaufende Gummilippen-Dichtungen vorgesehen, die nach dem Verriegeln der Tür die Dämmschale 26.1 luftdicht verschließen.

Die Fig. 11 zeigt eine isometrische Darstellung der transportablen Ladefläche 18.1 mit den passgenau ausgelegten Bodenwand-Segmenten 27, bevor die Speichermodul-Pakete auf die so vorbereitete transportable Ladefläche 18.1 aufgestellt werden. In den für die bodenseitigen Abschnitte der Flanschrahmen der Speichermodule 2 vorgesehenen Fugen zwischen den Bodenwand-Segmenten 27 ist die Zwischenlage aus Antirutschstreifen 31 angeordnet.

Das Haubenteil 28.1 und das Seitenteil 29.1 der Dämmschale 26.1 kann in einem Spaltraum zwischen der umlaufenden Aufkantung und den Bodenwand-Segmenten 27 auf der ebenen Bodenfläche der transportablen Ladefläche 18.1 aufsitzend und zugleich bündig an der Aufkantung angesetzt angeordnet sein (nicht dargestellt).

In dieser Ausführung kann ebenso eine seitlich umlaufende Überdeckung der Bodenwand-Segmente 27 geschaffen werden wie bei der Ausführung der Dämmschale 26, womit eine allseitig die Wärmespeicher-Vorrichtung 1 umschließende, gegenüber der Umgebung fugenarme Dämmschale 26.1 gebildet ist.

Das Haubenteil 28.1 und das Seitenteil 29.1 der Dämmschale 26.1 kann alternativ auch auf der Aufkantung aufsitzend angeordnet sein, womit unter anderem eine ebene Außenfläche der Dämmschale 26.1 beibehalten kann und eine einfachere Befestigung des Haubenteils 28.1 sowie bessere Funktionalität des Seitenteils 29.1 ermöglicht ist.

Die umlaufende Aufkantung kann beispielsweise eine Höhe aufweisen, die bündig mit der Oberkante der Bodenwand-Segmenten 27 abschließt oder - wie in der Fig. 11 ersichtlich - nur geringfügig über diese übersteht.

Im ersteren Fall können die auf der Aufkantung aufsitzenden Schalenteile (Haubenteil 28.1, Seitenteil 29.1) der Dämmschale 26.1 einen unmittelbarer, bündigen Anschluss an die Oberkante der Bodenwand-Segmente 27 realisieren, womit ebenso die vorgenannte allseitig die Wärmespeicher-Vorrichtung 1 umschließende, gegenüber der Umgebung fugenarme Dämmschale 26.1 bewirkt werden kann.

Zu Gunsten einer noch höheren Biegesteifigkeit und Masseneinsparung an der transportablen Ladefläche 18.1 ist es vorgesehen, die umlaufende Aufkantung - wie in der in der Ausführung nach der Fig. 11 - etwas höher als die Oberkante der Bodenwand-Segmenten 27 auszubilden, ohne dass der sich ergebene geringfügige Abstand der aufgesetzten Schalenteile (Haubenteil 28.1, Seitenteil 29.1) über der Oberkante der Bodenwand-Segmente 27, in diesem Beispiel von etwa 5 cm, zu einer nennenswerten Beeinträchtigung der vorteilhaften Wärmeschutzwirkung der Dämmschale 26.1 führt.

Insbesondere wird im Ergebnis durch die alternative transportable Ladefläche 18.1 in Verbindung mit der alternativen Dämmschale 26.1 das Gesamtgewicht der zu transportierenden Anordnung der kompakten Wärmespeicher-Vorrichtung 1 (Anordnung einer mobilen Wärmespeicher-Vorrichtung 1 mit Ladefläche 18.1 und Dämmschale 26.1) weiter deutlich reduziert und damit das Verhältnis der erreichbaren Wärmespeicherkapazität der Wärmespeicher-Vorrichtung 1 zu deren Transportgewicht wesentlich verbessert.

Der Schutzumfang der vorliegenden Erfindung ist durch die angefügten Ansprüche unter Heranziehung der Beschreibung und der Figuren definiert.

### Bezugszeichenliste

- 1: Wärmespeicher-Vorrichtung
- 2: Speichermodul, Wärmespeicher
- 3: Strömungseingang
- 4: Strömungsausgang
- 5: Gehäuse des Speichermoduls, Gehäuse des Wärmespeichers
- 6: Einlassdeckel
- 7: Auslassdeckel
- 8: Wärmespeicherplatte
- 9: Wärmetransportmedium
- 10: Strömungskanal für Wärmetransportmedium
- 11: Wärmeübertragungsfläche mit Oberflächenprofil
- 12: Distanzelement, Steg
- 13: Distanzelement, Noppe, Puffer
- 14: Fluid-Verteilkasten
- 15: Prallplatte
- 16: Fluid-Sammelkasten
- 17: Stromführungs-Element, Stromführungs-Kanal
- 18: transportable Ladefläche, alternative transportable Ladefläche .1, Transport-Plattform
- 19: Verteilkanal
- 20: Anschlussstutzen der Zulaufleitung
- 21: Sammelkanal
- 22: Anschlussstutzen der Rücklaufleitung
- 23: Verbindungsleitung
- 24: Anschlussstutzen des Strömungseingangs
- 25: Anschlussstutzen des Strömungsausgangs
- 26: Wärmedämmschale, Dämmschale, alternative Dämmschale .1
- 27: Bodenteil der Dämmschale, Bodenwand-Segment
- 28: Haubenteil der Dämmschale, alternatives Haubenteil .1
- 29: Seitenteil der Dämmschale, alternatives Seitenteil .1
- 30: Verbindungsstück
- 31: Antirutsch-Streifen

## Patentansprüche

1. Speichermodul mit einem modular ausgebildeten Gehäuse, wobei in dem Gehäuse eine Anzahl mit Latentspeichermaterial gefüllter Wärmespeicherplatten angeordnet sind und das Gehäuse von einem Wärmetransportmedium eines externen Fluidleitungssystems durchströmbar ist, wobei zwischen benachbart angeordneten Wärmespeicherplatten ein flacher Strömungskanal für den Transport des Wärmetransportmediums vorgesehen ist, **dadurch gekennzeichnet, dass** das Gehäuse (5) des Speichermoduls (5) und die Wärmespeicherplatte (8) derart ausgebildet sind, dass die Wärmespeicherplatte (8) halterlos im Gehäuse (5) lagerbar ist und unmittelbar übereinander und/oder unmittelbar nebeneinander gelagerte Wärmespeicherplatten (8) jeweils einen definierten Strömungskanal (10) bilden.

2. Speichermodul nach Anspruch 1, **dadurch gekennzeichnet, dass** die Wärmespeicherplatte (8) wenigstens ein Distanzelement (12, 13) aufweist, welches über ein Oberflächenprofil der Wärmeübertragungsfläche (11) der Wärmespeicherplatte (8) überstehend ausgebildet ist.

3. Speichermodul nach Anspruch 1 oder 2, **dadurch gekennzeichnet, dass** das /die Distanzelement(e) (12, 13) als ein Steg längserstreckt und/oder als ein Stegrahmen umlaufend und/oder als ein Pufferelement punktuell ausgebildet ist/sind.

4. Speichermodul nach einem der Ansprüche 1 bis 3, **dadurch gekennzeichnet, dass** die Wärmespeicherplatten (8) so ausgebildet und im Gehäuse (5) angeordnet sind, dass die sich gegenüberliegenden Wärmeübertragungsflächen (11) benachbarter Wärmespeicherplatten (8) ein gegenläufiges, zueinander konträr verlaufendes Oberflächenprofil aufweisen.

5. Speichermodul nach einem der vorstehenden Ansprüche, **dadurch gekennzeichnet, dass** das Gehäuse (5) einen Einlassdeckel (6) mit einem Strömungseingang (3) und eine Strömungsleiteinrichtung zur geführten Verteilung des Wärmetransportmediums (9) im Gehäuse (5) aufweist, wobei die Strömungsleiteinrichtung einen Fluid-Verteilkasten (14) und eine in dem Fluid-Verteilkasten integriert angeordnete, vorzugsweise als ein Lochblech ausgebildete, Prallplatte (15) aufweist.

6. Speichermodul nach einem der vorstehenden Ansprüche, **dadurch gekennzeichnet, dass** das Gehäuse (5) einen Auslassdeckel (7) mit einem Strömungsausgang (4) und einer Strömungsleiteinrichtung zur geführten Sammlung des Wärmetransportmediums (9) im Gehäuse (5) aufweist, wobei die Strömungsleiteinrichtung einen Fluid-Sammelkasten (16) und ein in dem Fluid-Sammelkasten (16) integriert angeordnetes Stromführungs-Element (17), vorzugsweise ausgebildet als ein Stromführungs-Kanal, aufweist.

7. Mit einem Latentspeichermaterial gefüllte Wärmespeicherplatte (8) zur Anordnung in einem Gehäuse (5) eines Wärmespeichers (2), in dem mehrere Wärmespeicherplatten (8) lagerbar sind und der von einem Wärmetransportmedium (9) eines externen Fluidleitungssystems durchströmbar ist, **dadurch gekennzeichnet, dass** die Wärmespeicherplatte (8) derart ausgebildet ist, dass sie halterlos im Gehäuse (5) lagerbar ist und unmittelbar übereinander und/oder unmittelbar nebeneinander gelagerten Wärmespeicherplatten (8) jeweils einen definierten Strömungskanal bilden (10).

8. Wärmespeicherplatte nach Anspruch 7, **dadurch gekennzeichnet, dass** die Wärmespeicherplatte (8) wenigstens ein Distanzelement (12, 13) aufweist, welches über ein Oberflächenprofil der Wärmeübertragungsfläche (11) der Wärmespeicherplatte (8) überstehend ausgebildet ist.

9. Wärmespeicherplatte nach Anspruch 7 oder 8, **dadurch gekennzeichnet, dass** das /die Distanzelement(e) (12,13) als ein Steg längserstreckt und/oder als ein Stegrahmen umlaufend und/oder als ein Pufferelement punktuell ausgebildet ist/sind.

10. Wärmespeicherplatte nach einem der Ansprüche 7 bis 9, derart ausgebildet und im Gehäuse (5) anordenbar, dass die sich gegenüberliegenden Wärmeübertragungsflächen (11) benachbart angeordneter Wärmespeicherplatten (8) ein gegenläufiges, zueinander konträr verlaufendes Oberflächenprofil aufweisen.

11. Wärmespeicher-Vorrichtung mit einer Anzahl von Speichermodulen (2) nach einem der Ansprüche 1 bis 6, **dadurch gekennzeichnet, dass** mehrere Speichermodule (2) in einer hydraulischen Reihenschaltung und/oder mehrere Speichermodule (2) in einer hydraulischen Parallelschaltung verbunden sind.

12. Wärmespeicher-Vorrichtung nach Anspruch 11, **dadurch gekennzeichnet, dass** die Strömungseingänge (3) mehrerer parallel geschalteter Speichermodule (2) mittels jeweils einer Verbindungsleitung (23) mit einem Verteilkanal (19) verbunden sind, und die Strömungsausgänge (4) der parallel geschalteten Speichermodule (2) mittels jeweils einer Verbindungsleitung (23) mit einem Sammelkanal (21) verbunden sind, wobei die Verbindungsleitungen (23), der Verteilkanal und der Sammelkanal derart ausgebildet und angeordnet sind, dass die jeweilige Gesamtlänge der Verbindungsleitungen (23) eines jeden der parallel geschalteten Speichermodule (2) im Wesentlichen gleich ist.

13. Wärmespeicher-Vorrichtung nach Anspruch 11 oder 12, **gekennzeichnet durch** eine Wärmedämmschale (26, 26.1), wobei die Wärmedämmschale (26, 26.1) die Speichermodule (2) der Wärmespeicher-Vorrichtung (1) allseitig umschließend angeordnet ist.

14. Wärmespeicher-Vorrichtung nach einem der Ansprüche 11 bis 13 aufweisend eine transportable Ladefläche (18, 18.1), auf der die Wärmespeicher-Vorrichtung (1) angeordnet ist.

## Claims

1. Storage module having a modularly designed housing, where a number of heat storage plates filled with phase change material are arranged in the housing and a heat transfer medium of an external fluid conduit system can flow through the housing, where a flat flow channel for transporting the heat transfer medium is provided between adjacently arranged heat storage plates, **characterised in that** the housing (5) of the storage module (5) and the heat storage plate (8) are designed in such a way that the heat storage plate (8) can be supported in the housing (5) without any holding elements, and heat storage plates (8) mounted directly above one another and/or directly next to one another each form a defined flow channel (10).

2. Storage module according to claim 1, **characterised in that** the heat storage plate (8) has at least one spacer element (12, 13) which is designed to project beyond a surface profile of the heat transfer surface (11) of the heat storage plate (8).

3. Storage module according to claim 1 or 2, **characterised in that** the spacer element(s) (12, 13) is/are designed as a strip extended longitudinally and/or as a surrounding strip frame and/or as a buffer element at points.

4. Storage module according to one of claims 1 to 3, **characterised in that** the heat storage plates (8) are designed and arranged in the housing (5) in such a way that the facing heat transfer surfaces (11) of adjacent heat storage plates (8) have surface profiles running in opposite directions, contrary to one another.

5. Storage module according to one of the preceding claims, **characterised in that** the housing (5) has an inlet cover (6) with a flow inlet (3) and a flow guiding device for the guided distribution of the heat transfer medium (9) in the housing (5), where the flow guiding device has a fluid distribution box (14) and a baffle plate (15), preferably designed as a perforated plate, integrated in the fluid distribution box.

6. Storage module according to one of the preceding claims, **characterised in that** the housing (5) has an outlet cover (7) with a flow outlet (4) and a flow guiding device for the guided collection of the heat transfer medium (9) in the housing (5), where the flow guiding device has a fluid collection box (16) and a flow guiding element (17), preferably designed as a flow guiding channel, integrated in the fluid collection box (16).

7. Heat storage plate (8) filled with a phase change material for arrangement in a housing (5) of a heat storage unit (2), in which several heat storage plates (8) can be supported and which a heat transfer medium (9) of an external fluid conduit system can flow through, **characterised in that** the heat storage plate (8) is designed in such a way that it can be supported in the housing (5) without any holding elements, and heat storage plates (8) mounted directly above one another and/or directly next to one another each form a defined flow channel (10).

8. Heat storage plate according to claim 7, **characterised in that** the heat storage plate (8) has at least one spacer element (12, 13) which is designed to project beyond a surface profile of the heat transfer surface (11) of the heat storage plate (8).

9. Heat storage plate according to claim 7 or 8, **characterised in that** the spacer element(s) (12, 13) is/are designed as a strip extended longitudinally and/or as a surrounding strip frame and/or as a buffer element at points.

10. Heat storage plate according to one of claims 7 to 9, designed and arrangeable in the housing (5) in such a way that the facing heat transfer surfaces (11) of adjacently arranged heat storage plates (8) have surface profiles running in opposite directions, contrary to one another.

11. Heat storage device with a number of storage modules (2) according to one of claims 1 to 6, **characterised in that** several storage modules (2) are connected in a hydraulic series circuit and/or several storage modules (2) are connected in a hydraulic parallel circuit.

12. Heat storage device according to claim 11, **characterised in that** the flow inlets (3) of several storage modules (2) connected in parallel are connected to a distribution channel (19) each by means of a connecting line (23), and the flow outlets (4) of the storage modules (2) connected in parallel are connected to a collection channel (21) each by means of a connecting line (23), where the connecting lines (23), the distribution channel and the collection channel are designed and arranged in such a way that the respective total length of the connecting lines (23) of each of the storage modules (2) connected in parallel is essentially the same.

13. Heat storage device according to claim 11 or 12, **characterised by** a thermal insulation shell (26, 26.1), where the thermal insulation shell (26, 26.1) is arranged to enclose the storage modules (2) of the heat storage device (1) on all sides.

14. Heat storage device according to one of claims 11 to 13, having a transportable loading platform (18, 18.1) on which the heat storage device (1) is arranged.

## Revendications

1. Module accumulateur comprenant un boîtier de configuration modulaire, sachant que dans le boîtier sont disposées un certain nombre de plaques accumulatrices de chaleur remplies d'un matériau accumulateur latent, et que le boîtier peut être traversé par le fluide caloporteur provenant d'un système externe de conduites de fluide, sachant qu'entre des plaques accumulatrices de chaleur disposées voisines est prévu un conduit d'écoulement plat destiné au transport du fluide caloporteur, **caractérisé en ce que** le boîtier (5) du module accumulateur (5) et la plaque accumulatrice de chaleur (8) sont configurés de sorte à pouvoir stocker la plaque accumulatrice de chaleur (8) sans supports dans le boîtier (5), et que des plaques accumulatrices de chaleur (8) directement superposées et/ou directement juxtaposées forment respectivement un conduit d'écoulement (10) défini.

2. Module accumulateur selon la revendication 1, **caractérisé en ce que** la plaque accumulatrice de chaleur (8) présente au moins un élément d'écartement (12, 13) configuré pour dépasser d'un profil superficiel de la surface de transmission thermique (11) de la plaque accumulatrice de chaleur (8).

3. Module accumulateur selon la revendication 1 ou 2, **caractérisé en ce que** l'élément d'écartement / les éléments d'écartement (12, 13) est/sont configuré(s) en forme de nervure s'étendant longitudinalement et/ou en forme de cadre à nervure périphérique et/ou en forme ponctuelle d'élément tampon.

4. Module accumulateur selon l'une des revendications 1 à 3, **caractérisé en ce que** les plaques accumulatrices de chaleur (8) sont configurées et disposées dans le boîtier (5) de sorte que les surfaces de transmission thermique (11) se faisant face, de plaques accumulatrices de chaleur (8) voisines, présentent des profils superficiels opposés, aux tracés réciproquement contraires.

5. Module accumulateur selon l'une des revendications précédentes, **caractérisé en ce que** le boîtier (5) présente un couvercle d'admission (6) comportant une entrée du flux (3) et un dispositif de guidage du flux pour distribuer de façon guidée le fluide caloporteur (9) dans le boîtier (5), sachant que le dispositif de guidage du flux présente un caisson distributeur (14) de fluide et une plaque chicane (15) disposée intégrée dans le caisson distributeur de fluide et configurée de préférence comme une tôle ajourée.

6. Module accumulateur selon l'une des revendications précédentes, **caractérisé en ce que** le boîtier (5) présente un couvercle d'évacuation (7) présentant une sortie du flux (4) et un dispositif de guidage du flux pour guider l'accumulation du fluide caloporteur (9) dans le boîtier (5), sachant que le dispositif de guidage du flux présente un caisson collecteur (16) de fluide et un élément de guidage (17) du flux disposé intégré dans le caisson collecteur (16) et configuré de préférence comme un conduit de guidage du flux.

7. Plaque accumulatrice de chaleur (8) remplie d'un matériau accumulateur latent, à disposer dans un boîtier (5) d'un accumulateur de chaleur (2) dans lequel plusieurs plaques accumulatrices de chaleur (8) peuvent être stockées, et qui peut être traversé par un fluide caloporteur (9) provenant d'un système externe de conduites de fluide, **caractérisée en ce que** la plaque accumulatrice de chaleur (8) est configurée de sorte à pouvoir la stocker sans support dans le boîtier (5) et que des plaques accumulatrices de chaleur (8) directement superposées et/ou directement juxtaposées forment respectivement un conduit d'écoulement (10) défini.

8. Plaque accumulatrice de chaleur selon la revendication 7, **caractérisée en ce que** la plaque accumulatrice de chaleur (8) présente au moins un élément d'écartement (12, 13) configuré pour dépasser d'un profil superficiel de la surface de transmission thermique (11) de la plaque accumulatrice de chaleur (8).

9. Plaque accumulatrice de chaleur selon la revendication 7 ou 8, **caractérisée en ce que** l'élément d'écartement / les éléments d'écartement (12,13) est/sont configuré(s) en forme de nervure s'étendant longitudinalement et/ou en forme de cadre à nervure périphérique et/ou en forme ponctuelle d'élément tampon.

10. Plaque accumulatrice de chaleur selon l'une des revendications 7 à 9, configurée et agençable dans le boîtier (5) de sorte que les surfaces de transmission thermique (11) se faisant face, de plaques accumulatrices de chaleur (8) disposées voisines, présentent des profils superficiels opposés, aux tracés réciproquement contraires.

11. Dispositif accumulateur de chaleur comprenant un certain nombre de modules accumulateurs (2) selon l'une des revendications 1 à 6, **caractérisé en ce que** plusieurs modules accumulateurs (2) sont connectés hydrauliquement en série et/ou que plusieurs modules accumulateurs (2) sont connectés hydrauliquement en parallèle.

12. Dispositif accumulateur de chaleur selon la revendication 11, **caractérisé en ce que** les entrées du flux (3) de plusieurs modules accumulateurs (2) connectés en parallèle sont reliées au moyen respectivement d'une conduite de liaison (23) avec un conduit distributeur (19), et que les sorties du flux (4) des modules accumulateurs (2) connectés en parallèle sont reliées au moyen respectivement d'une conduite de liaison (23) avec un conduit collecteur (21), sachant que les conduites de liaison (23), le conduit distributeur et le conduit collecteur sont configurés et disposés de sorte que la longueur totale respective des conduites de liaison (23) de chacun des modules accumulateurs (2) connectés en parallèle est pour l'essentiel identique.

13. Module accumulateur de chaleur selon la revendication 11 ou 12, **caractérisé par** une coque d'isolation thermique (26, 26.1), sachant que la coque d'isolation thermique (26, 26.1) est disposée de façon à entourer sur tous leurs côtés les modules accumulateurs (2) du dispositif accumulateur de chaleur (1).

14. Dispositif accumulateur de chaleur selon l'une des revendications 11 à 13, présentant une surface de chargement transportable (18, 18.1) sur laquelle le dispositif accumulateur de chaleur (1) est disposé.
